# EUROPÄISCHE PATENTSCHRIFT

(11) **EP 2 154 951 B1**
(45) Veröffentlichungstag und Bekanntmachung des Hinweises auf die Patenterteilung: **12.10.2016**
(21) Anmeldenummer: 08758449.6
(22) Anmeldetag: 09.05.2008
(51) Int. Cl.: A01K 1/12

(54) **MELKSTAND MIT MEHREREN MELKPLÄTZEN UND TRANSPORTSYSTEM ZUR BEFÖRDERUNG VON BEDIENPERSONAL UND SEMIAUTOMATISCHES MELKEN VON TIEREN**
MILKING PARLOUR COMPRISING SEVERAL MILKING STATIONS AND TRANSPORT SYSTEM FOR ADVANCING OPERATING PERSONNEL AND METHOD FOR SEMI-AUTOMATICALLY MILIKING ANIMALS
SALLE DE TRAITE À PLUSIEURS POSTES DE TRAITE ET SYSTÈME DE TRANSPORT POUR FAIRE AVANCER LE PERSONNEL DE SERVICE ET PROCÉDÉ DE TRAITE SEMI-AUTOMATIQUE

(30) Priorität: 10.05.2007 DE 102007021965
(43) Veröffentlichungstag der Anmeldung: 24.02.2010
(73) Patentinhaber: Maier, Jakob, 86842 Türkheim (DE); Hatzack, Wilfried, 86842 Türkheim (DE)
(72) Erfinder: Maier, Jakob, 86842 Türkheim (DE); Hatzack, Wilfried, 86842 Türkheim (DE)
(74) Vertreter: Grünecker Patent- und Rechtsanwälte PartG mbB
(86) Internationale Anmeldenummer: PCT/EP2008/003767
(87) Internationale Veröffentlichungsnummer: WO 2008/138565

(56) Entgegenhaltungen:
- DE-A1- 3 103 092
- DE-A1- 4 422 402
- US-A- 3 937 297
- US-A- 5 768 997
- US-A1- 2003 140 860
- US-A1- 2004 011 295

## Beschreibung

Die vorliegende Erfindung betrifft im Allgemeinen Verfahren und Systeme zum semiautomatisierten Melken von Milchtieren auf Grundlage mehrerer Melkplätze, die gleichzeitig betrieben werden können, unter der Überwachung von Bedienpersonal, wobei zumindest das Anrüsten entsprechender Melkgeschirre in den einzelnen Melkständen zum Teil manuell erfolgt.

In der Agrarwirtschaft ist auch wie in anderen wirtschaftlichen Gebieten die Produktivität und die Qualität der erzeugten Produkte von großer Wichtigkeit. Dies gilt insbesondere auf dem Sektor der Milcherzeugung, da auf diesem Gebiet ein großer wirtschaftlicher Druck auf den Erzeugern lastet. Einerseits sind große Mengen an Milch bei geringen Produktionskosten zu erzeugen sind und andererseits ist die geforderte Qualität der Milch nur unter großem Aufwand im Hinblick auf das Einhalten der Milchverordnung zu gewährleisten. Insbesondere wird durch die Milchverordnung ein gewisses Verfahren beim Erzeugen der Milch vorgeschrieben, etwa die Sichtkontrolle vor dem eigentlichen Melken der Milch, die zulässige Keimzahl bei der ermolkenen Milch, und dergleichen, die eine vollständige Automatisierung des entsprechenden Melkvorgangs erschweren. Hinzu kommt, dass im Hinblick auf die Qualität und die erzeugbare Menge auch andere Aspekte beim Melkvorgang eine wichtige Rolle spielen, die durch eine vollautomatische Handhabung des Melkvorgangs nur unter sehr großem Aufwand und zum Teil nur bedingt berücksichtigt werden können.

Um eine große Ausbeute bei hoher Qualität dauerhaft zu erreichen, ist der Ablauf des Melkvorgangs möglichst naturnah nachzubilden, so dass damit die natürlichen Abwehrmechanismen der Milchtiere im Hinblick auf das Eindringen von Keimen und Bakterien sowie auch die biologischen Vorgänge bei der Ausbildung der milchbildenden Zellen und deren Entleerung Berücksichtigung finden. So ist es beispielsweise wichtig, dass entsprechende Tiere vor dem eigentlichen Melkvorgang entsprechend zu Stimulieren, so dass das Tier in die entsprechende Stimmung versetzt wird, wodurch sich die Eutermuskulatur lockert und durch Ausschüttung des entsprechenden Enzyms die milchbildenden Zellen die Milch in die entsprechenden Euterviertel abgeben. Ferner ist, wie bereits dargelegt ist, eine entsprechende Kontrolle der Milchqualität vorzunehmen, um das Einleiten einer möglicherweise kontaminierten Milch in einen entsprechenden Vorratsbehälter nach Möglichkeit zu vermeiden. Eine geeignete Art der Stimulation erweist sich auch während des Melkvorgangs als günstig, da sich ein höherer Ausmerkungsgrad und damit dauerhaft ein höherer Milchertrag erreichen lässt. Während der Endphase des Melkvorgangs ist es von besonderer Bedeutung, eine geeignete Stimulation, die ggf. auch individuell für jedes Euterviertel angewendet wird, vorzusehen, um damit einen hohen Grad des Ausmelkens zu erreichen, ohne jedoch einen für das Tier unangenehmen Reiz beim Absaugen der Milch auszuüben, so dass auch die Keimzahl in der abschließenden Phase des Melkvorgangs gering bleibt. Insgesamt ist der Melkvorgang ein sehr komplexer Prozess, der für die individuellen Tiere sehr unterschiedlich verlaufen kann, so dass ein automatisierter standardisierter Melkvorgang in der Regel nicht geeignet ist, einen dauerhaft hohen Ertrag bei hoher Qualität der Milch zu erreichen. Es werden daher große Anstrengungen auf dem Gebiet der automatischen Melkanlagen unternommen, um den Melkvorgang den individuellen Gegebenheiten der Tiere anzupassen. Bei zunehmender Flexibilität in der Anpassung des automatisierten Melkvorgangs sind jedoch die entsprechenden vollautomatischen Anlagen, etwa Melkroboter, in der Anschaffung sehr kostenintensiv und weisen nur einen beschränkten Durchsatz auf.

Daher wird in anderen Strategien die Automatisierung einzelner Abschnitte des gesamten Melkvorgangs dort eingesetzt, wo sich eine gute Anpassung an den natürlichen Saugvorgang des Kalbes erreichen lässt, während andere Abschnitte des Melkvorgangs manuell oder zumindest unter Überwachung von Bedienpersonal ausgeführt werden. Beispielsweise kann die Sichtprüfung der Milch vor dem eigentlichen Melkvorgang in sehr effizienter Weise durch den Bediener erfolgen, der dann bei Bedarf auch eine geeignete Reinigung oder Desinfektion der Zitzen des Tieres durchführen und auch das Anlegen bzw. Anrüsten des Melkgeschirres vornehmen kann. Auf diese Weise kann die Verwendung äußerst komplexer sensorischer Systeme und mechanischer Einrichtungen reduziert werden, die in vollautomatischen Melkanlagen einen wesentlichen Punkt für die Investitionskosten und die Zuverlässigkeit der gesamten Anlage repräsentieren. Beispielsweise ist es für vollautomatische Systeme äußerst aufwendig, eine von der Milchverordnung vorgegebene Kontrollprobe vor dem eigentlichen Melkvorgang in zuverlässiger Weise durchzuführen.

Nach dem manuellen Anrüsten des Melkgeschirrs kann dann eine geeignete Stimulationsphase erfolgen, die ggf. tierindividuell einstellbar ist und mittels des Melkgeschirrs und entsprechender Steuerungssysteme erfolgen kann. Der eigentliche Melkvorgang kann ebenfalls in gesteuerter Weise ohne zusätzliche Einwirkungen des Bedienpersonals erfolgen, beispielsweise ebenfalls auf Grundlage geeignet ausgewählter Steuerungsalgorithmen. Während der Endphase des Melkvorgangs kann dann der Bediener den Vorgang überwachen und ggf. das Melkgeschirr abnehmen und die Zitzen in geeigneter Weise behandeln, beispielsweise reinigen oder desinfizieren und dergleichen. Somit ergeben sich bei dieser halbautomatischen Abwicklung des Melkvorgangs entsprechende Zeiten, in denen die Anwesenheit eines Bedieners nicht erforderlich ist, so dass typischerweise in einem Melkstand mehrere Melkplätze vorgesehen sind, die von einem einzelnen Bediener überwacht bzw. bedient werden. Somit lässt sich in diesen halbautomatischen Melksystemen eine hohe Qualität und ein hoher dauerhafter Ertrag erreichen, wobei jedoch insbesondere bei größeren Melkständen mit relativ vielen Melkplätzen eine hohe körperliche und geistige Belastung für das Bedienpersonal auftritt, da der entsprechende Bediener wünschenswerter Weise zur erforderlichen Zeit bei dem jeweiligen Melkplatz vor Ort sein sollte, um damit die erforderlichen Bedien- bzw. Kontrollfunktionen auszuüben. Dies kann jedoch bei relativ großen Tierbeständen zu einer Überforderung führen oder kann die Notwendigkeit einer entsprechenden Anzahl an Bedienerpersonen notwendig machen.

Ein Melkstand zum semiautomatischen Melken ist aus der US2004/011295 A bekannt. Dort wird ein Transportsystem zum Befördern einer Person zu einem Melkstand auf der Basis eines Steuersignals, z.B. auf Grund der Anwesenheit eines Tieres am Melkstand, vorgeschlagen.

Es ist eine Aufgabe der vorliegenden Erfindung, Mittel bereitzustellen, die beim Melken mehrerer Tiere in einem halbautomatischen Melksystem zu einer effizienteren Überwachung bzw. Bedienung einzelner Melkplätze führen.

Erfindungsgemäß wir diese Aufgabe in einem Aspekt gelöst durch einen Melkstand mit mehreren Melkplätzen gemäß den Merkmalen von Anspruch 1.
Durch den erfindungsgemäßen Melkstand werden die Arbeitsbedingungen für entsprechendes Bedienpersonal beim halbautomatischen Melken deutlich verbessert, da insbesondere die Wege zu den einzelnen Melkplätzen in einer für den Bediener effizienten und belastungsarmen Form zurückgelegt werden. Insbesondere bei Melkständen mit einer größeren Anzahl an Melkplätzen sind die während einer entsprechenden Arbeitsschicht zurückzulegenden Wegstrecken sehr groß und nehmen daher einen entsprechenden Anteil der Gesamtarbeitszeit ein, in der der Bediener seine Überwachungsfunktion nur sehr unzureichend und ineffizient wahrnehmen kann und ggf. seine Konzentration mit fortschreitender Arbeitszeit auf Grund der körperlichen Belastung reduziert wird. Durch das erfindungsgemäße Transportsystem kann die entsprechende Zeit für den Transport des Bedieners von diesem einerseits zur körperlichen Entspannung und andererseits zur Beobachtung bzw. zur Überwachung der entsprechenden Melkplätze benutzt werden, so dass die Effizienz des Bedienpersonals gesteigert, jedoch deren körperliche Belastung verringert wird.

Der Melkstand weist ein mit den mehreren Melkplätzen verbundenes Sensorsystem auf, das ausgebildet ist, ein zum Steuern des Transportmittel geeignetes Sensorsignal bereitzustellen. Das Sensorsystem in dem erfindungsgemäßen Melkstand ermöglicht es damit, ein für den Melkvorgang repräsentatives Signal für jeden einzelnen Melkplatz bereitzustellen, das dann wiederum zur Steuerung des Transportmittels des erfindungsgemäßen Transportsystems benutzt werden kann. Damit lässt sich zumindest ein Teil der Überwachungsfunktionen durch das Sensorsystem realisieren, so dass ggf. der Bediener entlastet werden kann oder dieser zusätzliche Informationen erhält, um damit in geeigneter Weise einen oder mehrere Melkplätze anzufahren. Beispielsweise kann das Sensorsystem entsprechende Ereignisse registrieren, die ggf. das Eingreifen des Bedieners erfordern. Z. B. können entsprechende Ausnahmesituationen erkannt werden, etwa wenn Melkbecher abfallen, wenn konventionelle Melkgeschirre verwendet werden, so dass ggf. ein erneutes Anrüsten mit einer entsprechenden Reinigung erforderlich ist. In anderen Fällen können entsprechende Statusmeldungen des Melkplatzes in dem Sensorsignal enthalten sein, so dass das auf Grund dieser Information eine Steuerung des Transportmittels erfolgen kann. Das Sensorsystem weist ein Sensorelement zur Erfassung einer mit dem aktuellen Milchstrom in Beziehung stehenden Größe in jedem der mehreren Melkplätze auf. Durch diesen Aufbau des Sensorsystems gelingt es, eine für den Melkvorgang sehr wesentliche Größe, d. h. den Milchfluss, zu erfassen. Der Milchfluss repräsentiert den zeitlichen Verlauf der ermolkenen Milchmenge und gibt damit einen guten Einblick über den Fortgang des jeweiligen Melkvorgangs. Da entsprechende Milchflusskurven individuell sehr verschieden sein können, wird somit die Möglichkeit geboten, die Priorität der entsprechenden Transportaktivitäten auf der Grundlage der den Milchfluss repräsentierenden Größe auszuführen. Auch kann die entsprechende Information dem Bediener zumindest während des entsprechenden Transportvorgangs zur Verfügung gestellt werden, so dass auch eine subjektive Bewertung des Melkvorgangs durch den Bediener in einer sehr zeiteffizienten Weise erfolgen kann. Insbesondere in Kombination mit einer ermittelten Identität des entsprechenden Tieres kann die zugeordnete Größe und damit der Milchfluss zu einer effizienten Bewertung des Melkvorgangs und damit auch zu einer Einteilung entsprechender Transportaktivitäten herangezogen werden.

Desweiteren weist der erfindungsgemäße Melkstand ein mit dem Transportsystem verbundenes Steuerungssystem auf, das ausgebildet ist, das Transportsystem anzuweisen, das Transportmittel entsprechend einer Eingabe einer Steuergröße zu einem der Melkplätze zu befördern. Auf Grund des Vorsehens des Steuerungssystems lassen sich die Transportaktivitäten in gesteuerter Weise durchführen, wobei nach Eingabe der entsprechenden Steuergröße ein weiteres Eingreifen des Bedieners ggf. nicht erforderlich ist, da ein geeigneter Zielmelkplatz auf Grund der Steuergröße von dem Steuerungssystem ausgewählt werden kann. Ferner ist das Steuerungssystem in einigen Ausführungsformen so ausgebildet, dass entsprechende Komponenten in dem Transportsystem in geeigneter Weise angesteuert werden, so dass ein für den Bediener sicherer und zuverlässiger Transport bewerkstelligt wird. Beispielsweise kann das Steuerungssystem bei Bedarf eine entsprechende Transportgeschwindigkeit in geeigneter Weise anpassen, so dass Unannehmlichkeiten bzw. Gefahren, etwa beim Anfahren oder beim Abbremsen im Wesentlichen vermieden werden.

Erfindungsgemäß weist das Steuerungssystem eine Referenzdateneinrichtung auf, die ausgebildet ist, zumindest für einige der zu melkenden Tiere individuell für den Melkvorgang relevante Referenzdaten zur Ermittlung der Steuergröße bereitzustellen. Durch das Bereitstellen Tier-individueller Referenzdaten wird eine entsprechende Anpassung der Transportaktivitäten ermöglicht, selbst wenn aktuelle, den Melkvorgang beschreibende Daten fehlen oder unvollständig sind. Beispielsweise kann auf der Grundlage der Erkennung der Identität der zu melkenden Tiere ein geeigneter Referenzdatensatz verwendet werden, um damit das bislang aufgezeichnete Verhalten der Tiere während eines Melkvorgangs zu nutzen, um die Transportaktivitäten zur Beförderung des Bedieners zu koordinieren. Beispielsweise ist bekannt, dass entsprechende Milchflusskurven für einzelne Tiere über längere Zeiträume hinweg relativ konstant sind, so dass auf Grund der entsprechenden Referenzdaten für die jeweilige Milchflusskurve ein entsprechender Verlauf des Melkvorgangs und damit auch ein erwarteter Endzeitpunkt ermittelt werden kann. In anderen Fällen können die Referenzdaten bereits direkt als entsprechende abgeschätzte Endzeitpunkte für den Melkvorgang bereitgestellt werden, wobei die Steuerung dann auf Grund dieser Endzeitpunkte vonstatten gehen kann. Der Bediener kann dann gegebenenfalls den tatsächlichen Status des Melkvorgangs und den tatsächlichen Endzeitpunkt festlegen und in das Steuerungssystem einspeisen, beispielsweise durch eine entsprechender Anwenderschnittstelle, wie sie zuvor beschrieben ist, wodurch weitere Daten hinzugewonnen werden können, um die aktuellen Referenzdaten in geeigneter Weise zu aktualisieren. In weiteren vorteilhaften Ausführungsformen ist das Steuerungssystem so aufgebaut, dass die Referenzdaten mit aktuellen den Melkvorgang beschreibenden Daten, die von dem Sensorsystem bereitgestellt werden, verglichen werden, um damit einen für die nachfolgenden Transportaktivitäten geeigneten Zeitpunkt zu bestimmen. Durch die Verwendung entsprechender Referenzdaten, beispielsweise entsprechender Referenzmilchflusskurven, in Verbindung mit aktuell gewonnenen Messdaten lässt sich dann ein entsprechender Endzeitpunkt für den Melkvorgang in sehr genauer Weise bestimmen, so dass das Steuerungssystem dann unter Kenntnis der Betriebsparameter des Transportsystems und der aktuellen Lage des Transportmittels einen geeigneten Zeitpunkt für den Beginn des Transport zu dem Melkplatz initiieren kann, der in zeitlicher Reihenfolge als nächstes die Anwesenheit des Bedieners erfordert. Beispielsweise kann dadurch ein relativ zeitgenaues Eintreffen des Bedieners erreicht werden, so dass diese lediglich wenige Sekunden vor dem eigentlichen Ende des Melkvorgangs vor Ort ist, um die erforderlichen Handlungen, etwa das Kontrollieren des Euters, eine Desinfektion und dergleichen vorzunehmen. Beispielsweise kann in Abhängigkeit der Erfahrung des entsprechenden Bedienpersonals ein Zeitpunkt von wenigen Sekunden vor dem abgeschätzten Endzeitpunkt als Ankunftszeit an dem entsprechenden Melkplatz ausreichend sein, um die erforderlichen Funktionen auszuführen, so dass sich insgesamt ein sehr hoher Durchsatz bzw. eine hohe Effizienz des entsprechenden Bedienpersonals und dem Melkstand erreichen lässt.

In einer vorteilhaften Ausführungsform weist das Sensorsystem ein Sensorelement zum Erkennen der Anwesenheit eines zu melkenden Tieres in jedem der mehreren Melkplätze auf. Durch dieses Sensorelement kann somit eine Auslastung entsprechender Melkplätze erkannt und überwacht werden oder es kann damit auch der Beginn eines neuen Melkvorgangs angezeigt werden, so dass eine geeignete Steuerung des Transportmittels so erfolgen kann, dass die vorbereitenden Tätigkeiten sowie das Anlegen des Melkgeschirrs zeiteffizient ausgeführt werden können.

In einer weiteren vorteilhaften Ausführungsform ist das Sensorsystem ausgebildet, die Identität eines zu melkenden Tieres in jedem der mehreren Melkplätze zu ermitteln. Durch das Erkennen der Identität des jeweiligen Tieres ergibt sich die Möglichkeit, entsprechende Tier-individuelle Aktivitäten durchzuführen, wobei die entsprechende Information dem Bediener bereits vor oder während dem Transport zur Verfügung gestellt werden kann. Auch kann eine Steuerung des Transportmittels in Abhängigkeit der Identität des Tieres erfolgen, so dass die Priorität von Transportaktivitäten in einer Tierindividuellen Weise erfolgen kann.

In einer vorteilhaften Ausführungsform weist das Steuerungssystem eine Anwenderschnittstelle auf, die zur Eingabe der Steuergröße durch die zu befördernde Person geeignet ist. Somit kann der Bediener mittels der Anwenderschnittstelle auf das Steuerungssystem einwirken, um damit einen geeigneten Melkplatz anzufahren, wobei die Auswahl des entsprechenden Melkplatzes auf der Grundlage entsprechender dem Bediener zugeführter Informationen erfolgen kann, etwa auf der Grundlage der zuvor erläuterten Sensorsignale, die beispielsweise in einer für die Steuerung des Transportmittels geeigneten Weise für den Bediener aufbereitet werden. Z. B. können ein oder mehrere der zuvor beschriebenen Sensorsignale, die jeweilige Zustände des Melkplatzes und/oder des entsprechendes Melkvorganges repräsentieren können, so verarbeitet werden, dass dem Bediener eine entsprechende zeitliche Reihenfolge der anzufahrenden Melkplätze angezeigt wird, ohne dass hierzu eine Auswertung der entsprechenden Informationen durch den Bediener erforderlich ist. In einigen Ausführungsformen ist die Anwenderschnittstelle so ausgebildet, dass entsprechende Informationen in geeigneter Weise dargestellt und ggf. verarbeitet werden können, so dass bei Bedarf eine entsprechende Steuergröße in das Steuerungssystem eingespeist werden kann. Ferner kann die Anwenderschnittstelle eine entsprechende automatisch erstellte "Route" des Transportmittels "überschreiben", so dass der Bediener auch bei einer automatisierten Ermittlung einer entsprechenden Transportroute jederzeit Änderungen vornehmen kann. Die Anwenderschnittstelle kann dabei eine beliebige geeignete Form aufweisen, um eine effiziente Kommunikation mit dem Steuerungssystem zu ermöglichen. Beispielsweise können Schalter, Tasten, Tastaturen, berührungsempfindliche Bildschirme, berührungsempfindliche Flächen, Sprachanalysemodule, jegliche Art von Zeigerinstrumenten, und dergleichen zur Eingabe der entsprechenden Steuerungsgröße vorgesehen werden. In ähnlicher Weise kann die Anwenderschnittstelle auch entsprechende Informationsausgabeeinheiten aufweisen, etwa einen Bildschirm, akustische oder andere Arten von Ausgabeeinheiten, um mit der zu befördernden Person zu kommunizieren.

In einer weiteren vorteilhaften Ausführungsform ist das Steuerungssystem zur Steuerung des Transportmittels auf Grundlage eines externen Steuerungssignals ausgebildet. Das externe Steuersignal, d. h. ein Signal, das nicht durch die Anwenderschnittstelle eingespeist wird, kann von beliebigen geeigneten externen Quellen erhalten werden, etwa einem übergeordneten Überwachungssystem mit einem Sensorsystem, wie dies zuvor beschrieben ist, um damit eine geeignete Reihenfolge von Transportaktivitäten für die zu befördernde Person zu ermitteln. Insbesondere in Kombination mit der Anwenderschnittstelle kann dabei auf Grund einer geeigneten Steuerungsstrategie eine Hierarchie der entsprechenden Eingaben erstellt werden, so dass die entsprechenden Transportaktivitäten unter Beibehaltung vordefinierter Kriterien erfolgen. Wenn beispielsweise ein übergeordnetes Steuerungssystem erkennt, dass die vom Bediener über die Anwenderschnittstelle eingespeisten Transportbefehle zu einem geringeren Durchsatz des gesamten Melkstandes und/oder zu einen geringeren Gesamtmilchertrag führen, kann eine entsprechende Korrektur bzw. Aufhebung der jeweiligen manuell eingespeisten Befehle bewirkt werden. In anderen Fällen kann der gesteuerte Transport auf der Grundlage eines übergeordneten Steuerungsschemas erfolgen, beispielsweise kann zusätzlich zu einer Bewertung der Priorität entsprechender aufeinanderfolgender Transportaktivitäten auch eine Steuerung zur Minimierung der erforderlichen Transportaktivitäten bzw. Transportzeiten erfolgen. Wenn beispielsweise die aktuelle Situation im Melkstand mehrerer alternative Transportsequenzen im Hinblick auf Erreichen eines gewünschten Melkvorganges möglich macht, kann beispielsweise die Sequenz mit der minimalen Gesamttransportzeit ausgewählt werden.

In einer weiteren vorteilhaften Ausführungsform ist das Steuerungssystem ausgebildet, die Steuergröße aus dem Sensorsignal zu gewinnen. Wie zuvor bereits erläutert ist, kann das Sensorsignal eine für das Auswählen einer zeitlich nächsten Transportaktivität erforderliche Information enthalten, so dass damit in einer automatisierten Weise das Anfahren eines Melkplatzes ohne weitere Eingriffe des Bedieners möglich ist. Auf diese Weise kann zumindest ein Teil der Überwachung entsprechender Melkvorgänge in den jeweiligen Melkplätzen von dem jeweiligen Sensorsystem übernommen werden, so dass die daraus gewonnene Entscheidung für den als nächsten anzufahrenden Melkplatz auf objektiven Daten beruht und somit kann der entsprechende Bediener deutlich entlastet werden, so dass die eigentliche Transportzeit für andere Aufgaben oder auch zur Regeneration genutzt werden kann.

In einer weiteren Ausführungsform ist das Steuerungssystem ausgebildet, die Steuergröße aus der mit dem aktuellen Milchfluss in Beziehung stehenden Größe zu gewinnen. Wie zuvor bereits erläutert ist, ist der Milchfluss und damit die diesen repräsentierende Größe ein wichtiges Kriterium, um den aktuellen Status des Melkvorgangs zu bewerten. Insbesondere kann damit der Verlauf und damit auch ein erwarteter Endzeitpunkt des Melkvorgangs abgeschätzt werden, so dass ein entsprechendes Transportereignis in zeitgerechter Weise durch das Steuerungssystem angewiesen werden kann, so dass der Bediener die Endphase des Melkvorgangs überwachen und in dann geeigneter Weise eingreifen kann. Da die entsprechende Milchflusskurve für unterschiedliche Tiere einen sehr unterschiedlichen Verlauf annehmen kann, wird dadurch gewährleistet, dass eine bedarfsgerechte Steuerung der Transportaktivitäten erfolgt, so dass eine unnötige Verweildauer bei Tieren mit einer längeren Melkzeit vermieden wird, ohne dass die Gefahr einer unkontrollierten Beendigung des Melkvorgangs auftritt.

In einer weiteren vorteilhaften Ausführungsform sind die mehreren Melkplätze in dem Melkstand stationäre Melkplätze. Auf diese Weise können aufwendige mechanische Konstruktionen, wie sie beispielsweise in vielen konventionellen Melkständen mit bewegbaren Melkplätzen vorzusehen sind, vermieden werden, wobei dennoch ein sehr hoher Durchsatz und eine hohe Effizienz des Bedienpersonals erreicht werden kann. Somit ergibt sich insgesamt im Vergleich zu konventionellen Systemen mit bewegbaren Tierplattformen ein geringerer Wartungsaufwand, da in der vorliegenden Erfindung lediglich gut bewährte bewegliche Komponenten für das Transportsystem vorgesehen sind, die eine relativ geringe Last zu transportieren haben, wobei die Effizienz des Bedienpersonals mindestens genauso hoch oder höher ist im Vergleich zu Melkständen mit mechanisch bewegten Melkplätzen, da die körperliche Belastung verringert und die mittlere "Relativgeschwindigkeit" zwischen dem zu melkenden Tier und dem Bediener erfindungsgemäß erhöht werden kann.

In einer weiteren vorteilhaften Ausführungsform ist der Melkstand ein Autotandem-Melkstand, in welchem zweireihig angeordnete Melkplätze durch das erfindungsgemäße Transportsystem durch den Bediener in effizienter Weise bedient bzw. überwacht werden können. Diese Art der linearen doppelseitigen Anordnung von Melkplätzen in stationärer Weise führt zu einem einfachen und robusten sowie auch platzsparenden Aufbau der entsprechenden Melkplätze, da insbesondere entsprechende Anschluss- und Versorgungsleitungen stationär verlegt werden können, während andererseits die entsprechenden Wege für das Transportmittel gering gehalten werden können, so dass sich insgesamt eine hohe Anzahl an Melkvorgängen durch einen einzelnen Bediener erreichen lässt.

In anderen Ausführungsformen sind die Melkplätze nicht-stationär, wobei das erfindungsgemäße Transportsystem dennoch die Effizienz des entsprechenden Bedienpersonals deutlich verbessern kann, indem zumindest ein ausgewählter Bereich der Verfahr-Strecke der nicht-stationären Melkplätze innerhalb des Wirkungsbereichs des Transportsystems angeordnet wird. Beispielsweise kann bei einem Melkkarussell, in welchem die zu melkenden Tiere in den jeweiligen Melkplätzen auf einer Kreisbahn geführt werden, zumindest über einen Abschnitt der Kreisbahn hinweg ein entsprechender Transport des Bedieners erfolgen, so dass sich hier die zuvor geschilderten Vorteile im Hinblick auf die Belastung und die Wirkmöglichkeiten des Bedieners erreichen lassen. Somit wird in diesem Falle eine hohe Kompatibilität zu entsprechenden bestehenden Melkständen erreicht, da diese sich durch Vorsehen eines geeigneten Transportsystems zu einem erfindungsgemäßen Melkstand umfunktionieren lassen.

In einer weiteren vorteilhaften Ausführungsform ist das Melkgeschirr jedes Melkplatzes für ein gesteuertes automatisches Abnehmen der Melkbecher ausgebildet. Durch diese Ausgestaltung des Melkgeschirrs kann der Gesamtvorgang des Melkens weiter automatisiert werden, ohne dass die Überwachungsfunktion des Bedienpersonals beeinträchtigt wird. Die Möglichkeit des automatisierten Abnehmens des Melkgeschirrs bietet zudem die Möglichkeit, dass bei konkurrierenden Transportaktivitäten zwischen zwei oder mehreren Melkplätzen ein hohes Maß an Flexibilität bei der Auswahl einer geeigneten Steuerungsstrategie gegeben ist, da auch ein "verspätetes" Eintreffen des Transportmittels mit dem Bediener zu keiner Beeinträchtigung des Melkvorgangs führt, wobei eine entsprechende Kontrollfunktion und/oder ein entsprechendes Eingreifen des Bedieners auch effizient nach dem Abnehmen des Melkgeschirrs erfolgen kann. Beispielsweise kann beim Zusammentreffen von entsprechenden Endphasen von Melkvorgängen in mehreren Melkplätzen innerhalb eines engen Zeitfensters die Auswahl des zeitlich nächstliegenden Transportereignisses auf Grundlage gewisser Kriterien erfolgen, ohne dass der Vorgang des Abnehmen des Melkgeschirrs zu berücksichtigen ist. Beispielsweise kann bei einer entsprechenden Situation eine Sequenz an Transportereignissen ausgewählt werden, die zu einer insgesamt minimalen Transportzeit für die mehreren Melkplätze führt, oder es können Tier-individuelle Kriterien benutzt werden, um eine zeitliche Hierarchie für das Anfahren der mehreren Melkplätze zu erstellen.

In einer weiteren vorteilhaften Ausführungsform ist das Melkgeschirr für eine Viertel-individuelle Ausmelkung der Euterviertel ausgebildet. Eine entsprechende Auslegung des Melkgeschirrs ermöglicht eine sehr effiziente Gestaltung des Melkvorgangs, wobei insbesondere in der Schlussphase eine Viertel-individuelle Reduzierung des Betriebsvakuums vorgenommen werden kann, um damit einen geeigneten Ausmelkungsgrad individuell für jedes Euterviertel zu erreichen. Im Zusammenhang mit der zuvor beschriebenen Ausführungsform kann dabei der Melkvorgang automatisch beendet werden, wobei typischerweise der Bediener kurz zuvor auf Grund der entsprechenden Steuerung des Transportssystems vor Ort ist, um eine entsprechende Kontrollfunktion und andere notwendige Handlungen auszuüben. In vorteilhaften Ausführungsformen ist dabei das Melkgeschirr so konzipiert, dass beim automatischen Abfallen einzelner Melkbecher diese den Boden des Melkplatzes nicht berühren, so dass eine entsprechende Verunreinigung zuverlässig vermieden wird. Bei einer entsprechenden Ausbildung des Melkgeschirrs ist es auch möglich, die einzelnen Melkbecher individuell an die Zitze anzulegen, ohne dass das Betriebsvakuum durch die noch nicht angelegten Melkbecher beeinträchtigt wird. Ferner kann durch eine entsprechende Vierteil-individuelle Ableitung der Milch auf ein entsprechendes Sammelstück verzichtet werden, so dass das Gewicht des gesamten Melkgeschirrs relativ gering ist, wodurch entsprechende negative Auswirkungen auf das Euter des Tieres, beispielsweise durch Verdrehung der Melkbecher und dergleichen weitestgehend vermieden werden. Ferner kann auch die körperliche Belastung für den Bediener deutlich reduziert werden, da lediglich einzelne Melkbecher mit geringem Gewicht beim Anlegen zu handhaben sind, so dass kein großer Kraftaufwand erforderlich ist.

In einer weiteren vorteilhaften Ausführungsform weisen das Transportsystem und/oder jeder der Melkplätze eine Arretiereinrichtung auf, die das Transportmittel an einer definierten Position an jedem der Melkplätze während einer Bearbeitungszeit fixiert. Mittels dieser Arretiereinrichtung wird somit eine stabile Position des Transportmittels, das beispielsweise in Form einer Kabine, einer Gondel, etc. vorgesehen sein kann, erreicht, so dass der Bediener zuverlässig und mit sicherem Stand die erforderlichen Tätigkeiten, beispielsweise das Desinfizieren des Euters nach dem Melkvorgang, das Anrüsten des Melkgeschirrs, und der gleichen ausführen kann. Die Arretiereinrichtung kann dabei in Form einer Kopplungseinrichtung zwischen dem Melkplatz und dem Transportmittel vorgesehen sein, etwa in Form einer elektromagnetischen Kopplung, einer mechanisch, elektrisch, magnetisch, hydraulisch oder pneumatisch verriegelbaren Kopplungseinrichtung, und dergleichen, so dass sich eine mechanische Verbindung mit hoher Stabilität zwischen dem Transportmittel und dem Melkplatz ergibt. In anderen Ausführungsformen können entsprechende Antriebsmittel in dem Transportsystem so gestaltet sein, dass das Transportmittel zuverlässig an einer gewünschten Position fixiert werden kann. Beispielsweise kann ein elektrischer Antriebsmotor so gesteuert werden, dass in Verbindung mit einem entsprechenden Antriebsstrang eine stabile Lage des Transportmittels an der gewünschten Position erreicht wird.

In einer weiteren vorteilhaften Ausführungsform weist das Transportsystem eine erste Antriebseinrichtung zur Bewegung des Transportmittels entlag einer Bahn und mindestens eine zweite Antriebseinrichtung zur Bewegung des Transportmittels in mindestens einer zu der Bahn unabhängigen Richtung auf. Auf Grund dieser Ausbildung des Transportsystems besteht eine große Flexibilität für die Bewegungsrichtung des Transportmittels, so dass beispielsweise eine Bewegung in einer durch die Bahn vorgegebenen Art und Weise möglich ist, wobei gleichzeitig weitere Bewegungen, beispielsweise zur genaueren Positionierung oder zum Drehen und Schwenken des Transportmittels, und dergleichen durchgeführt werden können. Beispielsweise ist in einer Ausführungsform der Melkstand mit Melkplätzen versehen, die zumindest teilweise linear angeordnet sind, so dass die Bahn eine im Wesentliche lineare Bahn und eine im Wesentlichen lineare Bewegungsrichtung vorgibt, während die zweite Antriebseinrichtung ein Drehen und Schwenken ermöglicht, etwa bei einem Tandem-Melkstand, so dass auf der Grundlage einer einzelnen Bahn für die lineare Bewegung zwei lineare Reihen von Melkplätzen bedient werden können.

In einer weiteren vorteilhaften Ausführungsform weist das Transportmittel eine Sicherungseinrichtung auf, die die Gefahr des Verlassens des Transportmittels bei Bewegung des Transportmittels reduziert. Bei einer entsprechenden Anordnung kann somit sichergestellt werden, dass das Transportmittel zu einem gegebenen Zielmelkplatz bewegt und dort angehalten wird, bevor der Bediener bei Bedarf das Transportmittel verlassen kann. Eine entsprechende Sicherungseinrichtung kann verwirklicht werden durch Lichtschranken, entsprechende Türen, etc. die als entsprechende Sensoren dienen oder in denen geeignete Sensoren vorgesehen sind, um dem Steuerungssystem Informationen zuzuführen, um die Position des Bedieners und/oder die Position des Transportmittels und dessen Geschwindigkeit anzugeben. Auf diese Weise kann beispielsweise eine automatische Tür erst bei Stillstand des Transportmittels entriegelt werden oder aber bei Erreichen einer kritischen Position kann eine Warnung an den Bediener erfolgen und ggf. können entsprechende Maßnahmen eingeleitet werden, etwa das Abbremsen bis zum Stillstand des Transportmittels, und dergleichen.

Vorteilhafterweise ist eine Anwenderschnittstelle in dem Transportmittel vorgesehen, so dass der Bediener die Möglichkeit besitzt, mit dem Steuerungssystem zu kommunizieren, und/oder entsprechende Informationen zu erhalten oder diese zu bearbeiten. Die Anbindung der Anwenderschnittstelle an das Steuerungssystem und/oder an andere Datenquellen, beispielsweise ein übergeordnetes Steuerungssystem, das etwa den Ablauf der einzelnen Melkvorgänge in dem Melkstand überwacht, und dergleichen, kann auf eine beliebige geeignete Art erfolgen, etwa durch entsprechende über das Transportsystem mitgeführte Kabelverbindungen, und/oder es können kabellose Kommunikationskanäle eingesetzt werden, so dass ein hohes Maß an Flexibilität bei der Installation des Transportsystems und des Transportmittels gewährleistet ist.

Vorteilhafterweise ist in dem Transportmittel ein Sitz zur Aufnahme der zu befördernden Person vorgesehen. Wie eingangs bereits erwähnt wurde, spielen auch die Arbeitsbedingungen des Bedieners eine wichtige Rolle zur Aufrechterhaltung der Effizienz des Bedienpersonals. Durch das Ausstatten des Transportmittels mit einer geeigneten Sitzeinrichtung kann ein ansprechendes Arbeitsumfeld geschaffen werden, so dass der Bediener die Zeiträume zwischen den einzelnen Aktivitäten in den Melkplätzen in geeigneter Weise nutzen kann, Informationen zu verwerten, Steuerungsvorgänge auszuführen, und dergleichen, ohne dass eine große körperliche Belastung auftritt. Dabei können entsprechend weitere Arbeitsmittel, etwa die Anwenderschnittstelle, und dergleichen in einer ergonomisch günstigen Lage vorgesehen sein, so dass die Bedienung der entsprechenden Arbeitsmittel in bequemer Weise erfolgen kann. In einigen Ausführungsformen ist dabei der Sitz bewegbar mit dem Transportmittel verbunden, so dass diese bei Ankopplung an einen entsprechenden Melkplatz der Sitz in diesen hineinbewegbar ist, um entsprechende Tätigkeiten, beispielsweise die Desinfektion der Zitzen nach dem Melkvorgang, das Anrüsten der Melkbecher, und dergleichen in einer bequemen Haltung durchführen zu können. In anderen vorteilhaften Ausführungsformen kann die Positionierung des Sitzes innerhalb des Transportmittels sowie dessen äußere Form in Verbindung mit der Form eines Andockplatzes der jeweiligen Melkplätze so gestaltet sein, dass ein Ausführen der entsprechenden Tätigkeiten ohne Verlassen des Sitzes ermöglicht wird. Auf diese Weise wird ein ergonomischer Arbeitsplatz geschaffen, wobei insbesondere im Zusammenwirken mit geeigneten Melkgeschirren, die ein Anrüsten ohne größeren Kraftaufwand sowie ein automatisches Abnehmen ermöglichen, Arbeitsbedingungen erreicht werden, die im Prinzip keine hohen Anforderungen an die körperliche Belastbarkeit stellen. Dadurch können Personen zur Überwachung und Ausübung der entsprechenden Tätigkeiten eingesetzt werden, die in konventionellen halbautomatischen Melkständen auf Grund der hohen körperlichen Belastung ungeeignet waren.

In einer weiteren vorteilhaften Ausführungsform ist in dem Transportmittel ein Versorgungsmagazin zur Bereitstellung von Betriebsmitteln zur Überwachung des Melkvorgangs und zum Ausführen erforderlicher Tätigkeiten vorgesehen. So können beispielsweise entsprechende Reinigungstücher, Desinfektionsmittel, und dergleichen innerhalb des Transportmittels mitgeführt werden, so dass ggf. auf die Bereitstellung entsprechender Betriebsmittel innerhalb der einzelnen Melkplätze verzichtet werden kann, so dass insgesamt die Versorgung des Melkstandes mit den entsprechenden Betriebsmitteln erleichtert werden kann, da diese nur zentral im Transportmittel bereitzustellen sind.

In einer vorteilhaften Ausführungsform weist das Transportmittel einen Versorgungsanschluss zur Bereitstellung eines Betriebsfluids auf. Damit wird ein hohes Maß an Flexibilität und Unabhängigkeit erreicht, da entsprechende Betriebsgase oder Flüssigkeiten im Transportmittel vorgesehen werden, so dass etwa Wasser, flüssige Desinfektionsmittel, und dergleichen zuverlässig zur Verfügung stehen. Dabei können die entsprechenden Betriebsmittel über das Transportsystem durch geeignet ausgebildete Leitungen in dem Transportmittel vorgesehen werden, während in anderen vorteilhaften Ausführungsformen eine Kopplungseinrichtung in dem Versorgungsanschluss enthalten ist, die eine Ankopplung an ein Gegenstück, das in jedem der Melkplätze vorgesehen ist, ermöglicht. Auf diese Weise kann das Betriebsfluid dennoch innerhalb des Transportmittels und ggf. am Arbeitsplatz innerhalb des Transportmittels vorgesehen werden, ohne dass entsprechende Leitungen z. B. in Form flexibler Schläuche, und dergleichen im Transportsystem mitzuführen sind. Entsprechende Kopplungseinrichtungen können dabei so ausgeführt werden, dass eine automatische Ankopplung erfolgt, sobald das Transportmittel an dem jeweiligen Melkplatz in geeigneter Weise positioniert ist.

In einer weiteren vorteilhaften Ausführungsform sind in dem Transportsystem mehrere Transportmittel vorgesehen. Durch das Bereitstellen mehrerer Transportmittel wird ein hohes Maß an Flexibilität bei der Gestaltung des Melkstandes und insbesondere bei der Anpassung an die Steuerungsstrategie und die Kapazität des Transportsystems erreicht. In einigen Ausführungsformen sind die mehreren Transportmittel so in dem gesamten Melkstand angeordnet, dass jedes Transportmittel eine gewisse Anzahl der mehreren Melkplätze bedient, so dass insbesondere bei größeren Tierbeständen mehrere Bediener nahezu unabhängig voneinander die jeweiligen Melkplätze überwachen und bedienen können. Insbesondere kann das Transportsystem in einer modularen Form aufgebaut sein, so dass damit eine Vergrößerung der Melkstandkapazität vorgenommen werden kann, ohne dass dabei aufwendige Änderungen im Aufbau und in der Steuerung des Transportsystems erforderlich sind. In anderen Ausführungsformen können die mehreren Transportmittel so vorgesehen sein, dass jedes dieser mehreren Transportmittel die mehreren Melkplätzen bedienen kann, wobei der Bediener dann in geeigneter Weise nach Verrichtung seiner Tätigkeit in einem der Melkplätze eines der Transportmittel auswählen kann, um den nächsten Transportvorgang auszuführen. Dabei kann eine entsprechende Angabe über den als nächstes anzufahrenden Melkplatz innerhalb der mehreren Transportmittel und/oder auch in einer für den Bediener effizient wahrnehmbaren Form außerhalb der Transportmittel vorgesehen sein. Beispielsweise kann dazu das Transportsystem eine Betriebseinstellung aufweisen, in der die mehreren Transportmittel kontinuierlich an den mehreren Melkplätzen vorbeibewegt werden, so dass der Bediener ein entsprechendes Transportmittel auswählen kann, wobei ggf. dann die Steuerungsstrategie des Steuerungssystems in geeigneter Weise so angepasst wird, dass trotz der vorgegebenen Transportrichtung dennoch möglichst kurze Transportzeiten auftreten. Z. B. kann bei einem Tandem-Melkstand ein umlaufendes Transportsystem die jeweiligen Melkplätze nacheinander mit den mehreren Transportmitteln bedienen, wobei dann das Steuerungssystem bei Erstellung der entsprechenden Prioritäten für die als nächstes anzufahrenden Melkplätze auch die Umlaufrichtung des Transportsystems berücksichtigt. Auf diese Weise kann der mechanische Aufbau des Transportsystems relativ einfach gestaltet werden, wobei dennoch eine relativ hohe Effizienz erreicht wird. Ferner gestattet dieses System, dass mehrere Bediener gleichzeitig das Transportsystem benutzen, so dass insbesondere bei größeren Betrieben eine hohe Effizienz des Bedienpersonals gegeben ist, wobei dennoch die Komplexität und der Aufwand für den Aufbau des Transportsystems moderat gering bleiben, so dass entsprechende Investitionskosten und Betriebskosten im Vergleich zu konventionellen vollautomatisierten Betrieben klein sind. In einigen Ausführungsformen kann das Transportmittel in Form eines kontinuierlich umlaufenden Bandes vorgesehen sein, so dass zu jeder Zeit eine Transportmöglichkeit für eine beliebige Anzahl an Bedienern vorhanden ist. Dabei können in geeigneter Weise positionierte Schnittstellen oder andere Anzeigeeinrichtungen und/oder Steuereinrichtungen vorgesehen sein, so dass jeder Bediener über den als nächsten anzufahrenden Melkplatz unterrichtet wird. So können beispielsweise geeignete Sensoren an den jeweiligen Melkplätzen angeordnet sein, die die Anwesenheit des Bedieners in dem Melkplatz registrieren, so dass darauf hin das Steuerungssystem in geeigneter Weise einen im Zeitablauf nächsten zu bedienenden Melkplatz ermitteln und in geeigneter Weise anzeigen kann.

Gemäß einem weiteren Aspekt der vorliegenden. Erfindung wird die Aufgabe gelöst durch ein Verfahren zum semiautomatischen Melken von Tieren gemäß Anspruch 12. Dabei umfasst das Verfahren das Bereitstellen eines Steuersignals für jeden von mehreren Melkplätzen, wobei das Steuersignal einen Betriebsstatus des jeweiligen Melkplatzes repräsentiert. Ferner wird ein Melkplatz ausgewählt, der als nächstes in der zeitlichen Reihenfolge eine Wechselwirkung mit einem Bediener erfordert, wobei das Auswählen auf Grundlage der Steuersignale erfolgt. Schließlich wird der Bediener zu dem ausgewählten Melkplatz durch ein Transportsystem befördert. Somit kann durch das gesteuerte Transportieren des Bedienpersonals mittels des Transportsystems zum einen die Effizienz des Bedieners auf Grund der reduzierten körperlichen Belastung verbessert werden und andererseits kann die Entscheidung, welcher Melkplatz als nächstes zu bedienen ist, auf Grundlage objektiver Informationen unabhängig von der in konventionellen Melkständen begrenzende Information für den Bediener getroffen werden. Die dadurch erreichten Entlastungen für das Bedienpersonal wirken sich damit direkt auf den Durchsatz eines Melkstandes mit einer vordefinierten Kapazität aus, so dass insgesamt die Produktivität des milcherzeugenden Betriebs gesteigert werden kann, ohne dass vergleichbar hohe Investitions- und Unterhaltungskosten im Vergleich zu vollautomatisierten Betrieben anfallen. Durch den Wegfall der Belastungen, wie sie in konventionellen Betrieben für das Bedienpersonal zum Teil anfallen, kann sich somit die Tätigkeit des einzelnen Bedieners besser auf wichtige Vorgänge konzentrieren, etwa das Durchführen einer Sichtprobe der zu melkenden Milch, eine geeignete Reinigung der Euterzitzen, eine geeignete Vorstimulation, und der gleichen, so dass ein hohes Maß an Hygiene, wie dies eigentlich von der Milchverordnung gefordert ist, eingehalten werden kann, wobei auch die Bedingungen für die einzelnen Tiere verbessert werden, so dass auch insgesamt deren Milchleistung dauerhaft auf einem hohen Niveau gehalten werden kann.

In einer weiteren vorteilhaften Ausführungsform umfasst das Bereistellen eines Steuersignals für jeden Melkplatz das Erfassen der Identität eines Tieres in jedem der Melkplätze und das Erzeugen des jeweiligen Steuersignals in Abhängigkeit von der erfassten Identität. Damit kann, wie bereits erläutert ist, nicht nur die Anwesenheit eines Tieres in einem jeweiligen Melkplatz erkannt werden, sondern es ist auch Information über die Identität des Tieres in dem Steuersignal enthalten, die somit benutzt werden kann, um die Beförderung des Bedieners in entsprechender Weise zu koordinieren. Beispielsweise kann für bestimmte Tiere bekannt sein, dass diese besonders kritisch oder unkritisch in ihrem Verhalten beim Melken sind, so dass eine höhere oder geringere Priorität für das Erstellen einer Transportroute zugewiesen werden kann, so dass der Bediener bei Bedarf möglichst schnell an einem Melkplatz mit höherer Priorität eintrifft.

Erfindungsgemäß umfasst das Bereitstellen eines Steuersignals für jeden Melkplatz das Erfassen des aktuellen Milchflusses und das Erzeugen des jeweiligen Steuersignals in Abhängigkeit von dem erfassten Milchfluss. Wie zuvor bereits erläutert ist, ist der Milchfluss, d. h. der zeitliche Verlauf der Milchmenge während des Melkvorganges, eine wichtige Größe, die Auskunft gibt über den aktuellen Status des Tieres und des Melkvorganges. Insbesondere kann auch auf der Grundlage des Milchflusses für jedes Tier individuell ein geeigneter Zeitpunkt für entsprechende Transportaktivitäten ermittelt werden, ohne dass die Gesamteffizienz wesentlich beeinträchtigt wird, so dass unabhängig von der jeweiligen Dauer des Melkvorganges der Bediener zu den erforderlichen Zeiten beim Tier eintrifft. Beispielsweise kann aus der aktuellen Milchmenge, der integrierten Milchmenge, der Steigung des Milchflusskurvenverlaufs, und dergleichen ein oder mehrere Werte ermittelt werden, die zum Bestimmen eines geeigneten Transportzeitpunkts verwendet werden können. So kann beispielsweise ein relativ flacher Verlauf der Milchflusskurve im Zusammenhang mit dem integrierten Wert der bisher ermolkenen Milch ein effizientes Maß darstellen, mit welchem ein erwarteter Endzeitpunkt des Melkvorgangs ermittelt werden kann, so dass der Transportvorgang so gesteuert wird, dass der Bediener zuverlässig zu dem gewünschten Zeitpunkt bei dem jeweiligen Tier eintrifft.

Desweiteren umfasst das Bereitstellen eines Steuersignals für jeden Melkplatz das Bereitstellen von Referenzdaten, die z.B. einen Melkverlauf repräsentieren, und das Erzeugen des jeweiligen Steuersignals auf der Grundlage der Referenzdaten. Mittels geeignet ausgewählter Referenzdaten, die beispielsweise in Form von Melkzeitdauern für einzelne Tiere oder als durchschnittliche Melkdauern für Tiere, als gemittelte Milchmengen, und dergleichen vorgesehen werden, kann bereits eine effiziente Steuerung erfolgen, falls aktuelle Messwerte, die den aktuell verlaufenden Melkvorgang in jedem Melkplätze beschreiben, noch nicht oder nicht verfügbar sind. Beispielsweise können entsprechende Referenzdaten verwendet werden, wenn ggf. entsprechende Signale aus einem Melkplatz auf Grund technischer Probleme nicht vorliegen oder wenn entsprechende Messdaten offensichtlich falsche Informationen enthalten. Durch das Bereitstellen der Referenzdaten kann dann dennoch ein zuverlässiger störungsfreier Ablauf beim Transport des Bedieners erreicht werden.

Dabei werden die Referenzdaten individuell zumindest für einige der mehreren zu melkenden Tiere erstellt. Auf diese Weise gelingt eine Tier-individuelle Einschätzung der entsprechenden Transportaktivitäten, selbst wenn entsprechende aktuelle Messwerte nicht vorhanden sind oder aus anderen Gründen nicht verwendet werden können. Beispielsweise können entsprechende Tier-individuelle Referenzdaten in Form von individuell zugewiesenen Melkdauern vorgesehen werden, so dass beispielsweise beim Erkennen eines gewissen Tieres von einer vorbestimmten Melkdauer ausgegangen werden kann, so dass daraufhin nach Beginn des Melkvorgangs und nach Anlegen der Melkbecher ein geeigneter Transportzeitpunkt errechnet werden kann, um etwa eine Desinfektion der Zitzen nach erfolgtem Melkvorgang durchführen zu können. In vorteilhaften Ausführungsformen repräsentieren die individuellen Referenzdaten eine Milchflusskurve für das jeweilige Tier. Wie zuvor bereits dargelegt ist, beschreibt die Milchflusskurve in sehr detaillierter Weise das Verhalten jedes einzelnen Tieres während des Melkvorgangs. Es zeigt sich, dass die Milchflusskurve eine relativ charakteristische Form für die einzelnen Tiere aufweist, die auch über längere Zeiträume hinweg ihr charakteristische Form nicht wesentlich ändert, so dass auf der Grundlage der entsprechenden Milchflusskurven oder eines geeigneten ermittelten Durchschnittswertes eine relativ zuverlässige Vorhersage des aktuellen Melkvorgangs stattfinden kann. Insbesondere im Zusammenwirken mit aktuell ermittelten Milchflussdaten kann dann auch eine sehr genaue Bestimmung eines geeigneten Transportzeitpunkts erfolgen, wobei auch entsprechende Ausnahmeereignisse, etwa signifikante Abweichungen von der Milchflussreferenzkurve und dergleichen ein entsprechendes Transportereignis auslösen können.

In einer vorteilhaften Ausführungsform wird aus der Milchflusskurve ein erwarteter Endzeitpunkt für den Melkvorgang des jeweiligen Tieres bestimmt und zum Auswählen des nächsten Melkplatzes verwendet, und das Befördern des Bedieners zu dem nächsten Melkplatz wird auf der Grundlage des bestimmten Endzeitpunkts gesteuert. Wie eingangs bereits erwähnt wurde, ist insbesondere die Kontrollfunktion beim Abschluss des Melkvorgangs sowie die Desinfektion des Euters von besonderer Wichtigkeit, so dass durch die Steuerung auf Grundlage der Milchflusskurve eine Tier-individuelle Koordinierung der Transportaktivitäten stattfindet, um damit das Eingreifen des Bedieners in diesem wichtigen Zeitpunkt sicherzustellen. Beispielsweise kann auf Grund der Milchflusskurven bereits mit hoher Genauigkeit der Verlauf des Melkvorgangs vorhergesagt werden, so dass bei Kenntnis der Identität der einzelnen Tiere somit bereits eine Transportroute im Voraus bestimmt werden kann, wobei natürlich auch andere Faktoren Berücksichtigung finden können. Wenn beispielsweise bei Eintreten des Tieres in einen entsprechenden Melkplatz dessen Identität festgestellt wird, so kann auf Grund der geeigneten Referenzdaten bezüglich der Milchflusskurve ein erwarteter Verlauf des Melkvorgangs vorausgesagt und mit den aktuell stattfindenden Melkvorgängen in den anderen Melkplätzen verglichen werden, so dass eine voraussichtliche Vorhersage von entsprechenden Transportereignissen für den Bediener vorliegt. Wenn eine entsprechende Überlappung von Zeitpunkten für den Endzeitpunkt von einigen der Melkvorgänge ermittelt wird, kann beispielsweise der Beginn des Melkvorgangs entsprechend verzögert werden, indem das entsprechende Transportereignis zum Anrüsten des Melkgeschirrs so ausgeführt wird, dass für die Ereignisse mit hoher Priorität, etwa der Endzeitpunkt des Melkvorgangs, ein ausreichendes Zeitfenster erhalten wird.

In einer anschaulichen Ausführungsform umfasst das Auswählen des nächsten Melkplatzes das periodische Aktualisieren einer jedem der Steuersignale zugeordneten Priorität und das Auswählen des Melkplatzes mit dem Steuersignal mit der höchsten Priorität. Auf diese Weise kann effizient eine hierarchische Struktur in aktueller Weise erstellt werden, so dass eine Abarbeitung der Sequenz aus Transportereignissen entsprechend der ermittelten Prioritäten stattfinden kann. Dabei ermöglicht die vorliegende Erfindung das Einbeziehen wichtiger Kriterien zur Ermittlung einer effizienten Transport- und Bedienerauslastung, die in konventionellen semiautomatischen Betrieben, Melkkarussellen, und dergleichen nur schwer zu berücksichtigen sind. So kann beispielsweise die Aufstellung der aktuellen Prioritäten sowohl unter Berücksichtigung Tier-spezifischer Eigenheiten als auch ökonomischer Faktoren erfolgen, um beispielsweise einen möglichst hohen Durchsatz zu erreichen. Tier-spezifische Kriterien zum Bestimmen der Prioritäten sind beispielsweise der Endzeitpunkt eines Melkvorgangs und/oder die Bestimmung des Zeitpunkts, wenn ein Tier den Melkplatz betritt, und/oder das Auftreten eines Ausnahmeereignisses in einem jeweiligen Melkplatz. Ein Ausnahmeereignis kann als ein Ereignis betrachtet werden, das ggf. eine unmittelbare Prüfung des Status des Melkplatzes und damit auch eine vorrangige Transportpriorität erfordern kann. Beispielsweise können entsprechende Sensoren einen Fehler im Melkplatz und/oder in dem darin verwendeten Melkgeschirr anzeigen, etwa das Abfallen eines Melkbechers, und dergleichen so dass dann ein Transportereignis mit hoher Priorität veranlasst werden kann, um die Gesamteffizienz des Melkstandes nicht unnötig zu reduzieren. Auch signifikante Abweichungen von einem erwarteten Milchfluss können ggf. als Ausnahmeereignis bewertet werden, das ein Transportereignis mit hoher Priorität bewirken kann.

In einer weiteren vorteilhaften Ausführungsform umfasst das Befördern des Bedieners das Positionieren und Fixieren eines Transportmittels, etwa einer Transportgondel oder einer Transportkabine, an den ausgewählten Melkplatz. Durch diese Art der Beförderung kann somit eine geeignete und "stabile" Arbeitsumgebung für den Bediener während des Transports und auch während der Anwesenheit in dem entsprechenden Melkplatz geschaffen werden. Durch die Positionierung und Fixierung an dem jeweiligen Melkplatz wird die Möglichkeit geschaffen, einen bequemen und sicheren Zugang zum Melkplatz herzustellen oder direkt von dem Transportmittel aus die erforderlichen Tätigkeiten auszuüben, so dass auch die Umgebungsbedingungen für den Bediener in gewisser Weise steuerbar sind. Z. B. kann eine Klimatisierung erfolgen, zumindest zu einem gewissen Grade, und/oder es können bestimmte Vorkehrungen zur Verbesserung der Hygiene getroffen werden, etwa ein Fliegenschutz, etc. Bei entsprechender Ausbildung des Melkplatzes und des Transportmittels kann eine "Kontamination" des Transportmittels und damit des direkten Arbeitsplatzes des Bedieners durch den Melkplatz zum großen Teil verhindert werden, so dass auch auf Grund dieser im Gegensatz zu konventionellen Melkanlagen unterschiedlichen Arbeitsbedingungen für das Bedienpersonal eine Verbesserung der Effizienz sowie auch der Flexibilität für den Einsatz des Personals erreicht werden kann.

In einer weiteren anschaulichen Ausführungsform umfasst das Befördern des Bedieners das kontinuierliche Vorbeibewegen eines oder mehrerer Transportmittel, etwa von Transportgondeln, an den mehreren Melkplätzen und das Markieren des ausgewählten Melkplatzes. Mit dieser Art der Beförderung kann ein Transportsystem mit geringer mechanischer Komplexität Verwendung finden, wobei dennoch eine hohe Effizienz bei der Bewältigung der anstehenden Transportaktivitäten erreichbar ist. Insbesondere können in einfacher Weise mehrere Bediener eingesetzt werden, wobei durch die Markierung eines als in der Transportsequenz als nächstes anzusteuernden Melkplatzes eine Koordinierung ermöglicht. Auf diese Weise kann eine einfache Anpassung an unterschiedliche Betriebsgrößen oder Auslastungen oder Änderungen im Tierbestand vorgenommen werden, ohne dass wesentliche Eingriffe in das Transportsystem und das zugehörige Steuerungssystem erforderlich sind.

Somit stellt die vorliegende Erfindung auf Grund einer effizienten Beförderung eines oder mehrerer Bediener die Möglichkeit bereit, große Tierbestände in einer äußerst effizienten Weise während des Melkvorgangs zu versorgen, da durch die Beförderungsstrategie eine deutliche Arbeitsentlastung für das Bedienpersonal erreicht wird, das somit die freiwerdenden Kapazitäten für eine verbesserte Tier-individuelle Überwachung und Betreuung aufwenden kann. Im Zusammenwirken mit modernen Melkgeschirren, die beispielsweise eine Viertel-individuelle Steuerung ermöglichen und damit bei geeigneter Ausbildung auch keine Sammelstücke erfordern, kann ein sehr kräfteschonendes Anrüsten des Melkgeschirrs erreicht werden, so dass in Kombination mit der verbesserten Transporteffizienz und ggf. einer gesteuerten Koordinierung der Transportaktivitäten insgesamt Arbeitsbedingungen geschaffen werden, die eine sehr tiergerechte aber dennoch sehr wirtschaftliche Milcherzeugung ermöglichen. In einigen Ausführungsformen können die entsprechenden Transportmittel als geeignete "Arbeitsplätze" ausgestattet sein, die eine komfortable Erfüllung der entsprechenden Aufgaben bei deutlich reduzierter Belastungen ermöglichen, wobei bei Bedarf auch die Umgebungsbedingungen in dem Arbeitsplatz entsprechend eingestellt werden können, so dass über längere Zeiträume hinweg ein konstant hoher Durchsatz erreicht werden kann. Besonders vorteilhaft kann das erfindungsgemäße Konzept der Beförderung des Bedieners in Verbindung mit Melkständen mit stationären Melkplätzen angewendet werden, etwa dem Tandem-Melkplatz, in welchem Melkplätze zweireihig linear angeordnet sind, so dass für die Ausstattung der Melkplätze keine großen mechanischen Anforderungen vorausgesetzt werden. Damit können insgesamt die Investitionskosten für den Melkstand einschließlich des Transportsystems deutlich kleiner sein als bei vollautomatischen Anlagen, wobei jedoch ein deutlich höherer Durchsatz und eine tiergerechtere Erzeugung der Milch bei Einhaltung der Milchverordnung erreicht werden kann. So zeigen entsprechende praktische Ergebnisse, dass bei Einsatz eines geeigneten Melkgeschirrs, wie es zuvor beschrieben ist, durchschnittlich 7,2 Melkungen pro Stunde möglich sind, so dass bei einem Melkstand mit 10 Melkplätzen diese von einem einzelnen Bediener problemlos versorgt werden können, so dass damit bereits über 70 Melkungen pro Stunde möglich sind, wobei auf Grund der verbesserten Arbeitsbedingungen die Effizienz über eine ganze Schicht hinweg beibehalten werden kann, so dass 500 bis 600 Melkvorgänge von einem einzelnen Bediener durchgeführt werden können. Bei einem Betrieb mit zwei Schichten mit jeweils einem Bediener könnte somit ein Tierbestand von etwa 600 Tieren versorgt werden, wobei die zuvor beschriebenen Vorteile im Hinblick auf ein tiergerechtes Melken und auf die Einhaltung der Milchverordnung erreicht werden können. Ferner können im Gegensatz zu vollautomatischen Systemen, die gegenwärtig verfügbar sind, die entsprechenden Anschaffungskosten deutlich geringer sein.

Weitere Ausführungsformen sind auch in den angefügten Patentansprüchen beschrieben und gehen auch aus der folgenden detaillierten Beschreibung hervor, die mit Bezug zu den begleitenden Zeichnungen angegeben ist, in denen:
Fig. 1a einen erfindungsgemäßen Melkstand schematisch darstellt, der ein Transportsystem zum Befördern eines Bedieners umfasst;
Fig. 1b schematisch eine Draufsicht auf ein Transportmittel zeigt, das als Arbeitsplatz für den Bediener gemäß anschaulicher Ausführungsformen gestaltet ist;
Fig. 1c schematisch entsprechende Milchflusskurven zeigt, die zum Steuern der Transportaktivitäten in anschaulichen Ausführungsformen eingesetzt werden können;
Fig. 1d schematisch ein Melkgeschirr zeigt, in der Melkbecher einzeln angesetzt und automatisch abgenommen werden können, wobei dieses Melkgeschirr vorteilhaft mit dem erfindungsgemäßen Melkstand kombiniert werden kann;
Fig. 1e schematisch eine Ausführungsform eines Doppel-Tandem-Melkstandes mit einem entsprechenden Transportsystem gemäß weiterer Ausführungsformen zeigt;
Fig. 2 schematisch einen Melkstand gemäß eine weiteren anschaulichen Ausführungsform zeigt, wobei mehrere Transportmittel vorgesehen sind; und
Fig. 3a und 3b entsprechende Flussdiagramme repräsentieren, die einen Steuerungsablauf gemäß anschaulicher Ausführungsformen der vorliegenden Erfindung wiedergeben.

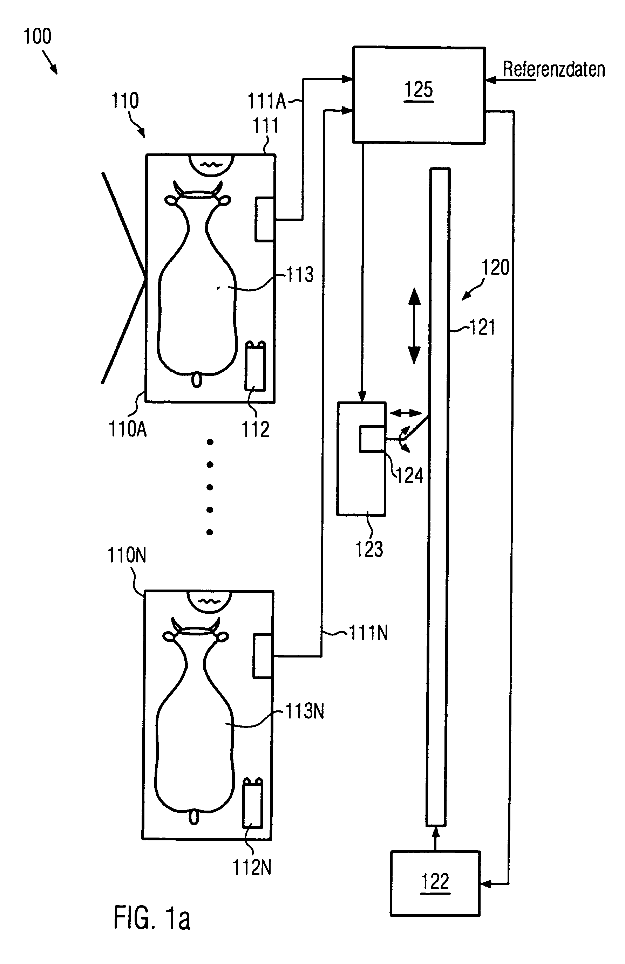

Fig. 1a zeigt schematisch einen Melkstand 100, der mehrere Melkplätze 110 aufweist, die auch als 110a, ..., 110n bezeichnet sind und die ausgebildet sind, ein zu melkendes Tier 113 aufzunehmen. Jeder der Melkplätze 110 umfasst ferner ein Melkgeschirr 112, d.h., eine Vorrichtung mit Melkbechern und entsprechenden Komponenten zum Absaugen der Milch und gegebenenfalls zum Stimulieren des Euters, das manuell an das zu melkende Tier 113 vor einem Melkvorgang anzulegen ist. In anschaulichen Ausführungsformen ist das Melkgeschirr 112 als ein "semiautomatisches" Melkgeschirr vorgesehen, wobei zumindest einige Funktionen, etwa das Abnehmen und Einziehen von Melkbechern in automatisierter Weise erfolgen kann, wie dies nachfolgend detaillierter beschrieben ist. In anderen Ausführungsformen können konventionelle Melkgeschirre verwendet werden, die ein manuelles Anlegen an die Zitzen des Tieres 113 und ein manuelles Abnehmen erfordern. In einer anschaulichen Ausführungsform ist ferner ein Sensorsystem 111 in jedem der Melkplätze 110 vorgesehen, das ein für den Melkvorgang kennzeichnendes Sensorsignal 111 a, ..., 111 n bereitstellen kann. Beispielsweise kann das Sensorsystem 111 entsprechend ausgebildet sein, um die Anwesenheit des Tieres 113 zu erfassen, etwa in Form geeigneter Sensoren, etwa Lichtschranken, und dergleichen. In anderen Ausführungsformen ist zusätzlich oder alternativ ein Sensorelement zur Erfassung der Identität des Tieres 113 in dem jeweiligen Melkplatz 110a, ..., 110n vorgesehen. Beispielsweise können die einzelnen Tiere 113 entsprechende Markierungen, etwa Halsbänder, Ohrenclips, und dergleichen aufweisen, die ein Auslesen der entsprechenden Kennung des Tieres beispielsweise mittels elektromagnetischer, etwa induktiver, oder anderer Sensoren ermöglichen. In weiteren anschaulichen Ausführungsformen kann das Sensorsystem 111 alternativ oder zusätzlich weitere den Melkvorgang kennzeichnende Eigenschaften erfassen, beispielsweise indem das Sensorsystem 111 mit dem Melkgeschirr 112 oder mit darin verbundenen Komponenten in geeigneter Weise gekoppelt ist, um damit entsprechende Daten zu erfassen. In einer Ausführungsform ist das Sensorsystem 111 ausgebildet, eine Größe zur Bestimmung des Milchflusses zu erfassen. Zu diesem Zweck können geeignete Durchflussmengen-Sensoren in dem Melkgeschirr 112 vorgesehen sein, die somit eine aktuelle Erfassung der ermolkenen Milch ermöglichen. Das Sensorsystem 111 kann auch weitere Sensoren aufweisen, etwa Sensoren, die die Qualität der Milch angeben, und dergleichen, so dass auch eine entsprechende Information in dem jeweiligen Sensorsignal 111a, ..., 111n enthalten sein kann. In der dargestellten Ausführungsform sind die mehreren Melkplätze 110 stationäre Melkplätze, d. h. das Tier 113 betritt den jeweiligen Melkplatz 110a, ..., 110n und es findet keine Positionsänderung des Tieres 113 zusammen mit dem jeweiligen Melkplatz 110 statt. In anderen Ausführungsformen können nicht-stationäre Melkplätze vorgesehen sein, wie sie etwa in einem Melkkarussell bereitgestellt sind, so dass während des Melkvorganges die einzelnen Melkplätze 110a, 110n ihre Position verändern.

Der Melkstand 100 umfasst ferner ein Transportsystem 120, das in der dargestellten Ausführungsform eine Führung 121 aufweist, die eine Bewegungsbahn für ein Transportmittel 123 definiert. Die Führung 121 ist so ausgestaltet, dass durch ein geeignetes Antriebsmittel 122 eine Bewegung des Transportmittels 123 in der durch die Führung 121 definierten Bahn ermöglicht wird. Beispielsweise kann die Antriebseinrichtung 122 eine beliebige bekannte Einrichtung sein, etwa ein Elektromotor, ein Hydraulikmotor, und dergleichen, wobei das Transportmittel 123 mit der Führung 121 in geeigneter Weise gekoppelt ist, so dass die durch die Antriebseinrichtung 122 ermittelte Bewegung auf das Transportmittel 123 übertragen wird. Dazu können bekannte Verfahren verwendet werden, etwa ein Antriebsseil, das zumindest während der Betriebsphase fest mit dem Transportmittel 123 gekoppelt ist, so dass je nach Antriebsrichtung der Antriebseinrichtung 122 eine beliebige Bewegung entlang der durch die Führung 121 definierten Bahn möglich ist. In anderen Fällen wird die entsprechende Bewegung mittels eines Getriebes und entsprechender Gestänge, etc. auf das Transportmittel 123 übertragen. Die Führung 121 kann auch in Form einer Schiene vorgesehen werden, auf der entsprechende Rollen durch die Einwirkung der Antriebseinrichtung 122 zur Bewegung des Transportmittels 123 führen. In der schematisch dargestellten Ausführungsform ist eine weitere Antriebseinrichtung 124 vorgesehen, die eine zu der Führung 121 definierten Bewegungsbahn unabhängige Bewegung, etwa eine laterale Bewegung und/oder eine Schwenkbewegung, und dergleichen ermöglicht. Beispielsweise kann die Antriebseinrichtung 124 entsprechende mechanische Komponenten, etwa in Form einer hydraulischen Einrichtung, und dergleichen aufweisen, so dass die gewünschte Bewegbarkeit für das Transportmittel 123 zusätzlich zu der durch die Antriebseinrichtung 122 vermittelten Bewegung ermöglicht wird. In anderen Ausführungsformen kann auch die Antriebseinrichtung 122 unmittelbar mit dem Transportmittel 123 gekoppelt sein, beispielsweise in Form eines Elektromotors, wobei dann die Führung 121 lediglich als ein passives Element des Transportsystems 120 dient. Ferner können in der Führung 121 entsprechende Zuleitungen, etwa hydraulische Zuleitungen, elektrische Leitungen, und dergleichen vorgesehen sein, um eine für den Transport und möglicherweise für weitere Funktionen in dem Transportmittel 123 erforderliche Versorgung bereitzustellen. In der dargestellten Ausführungsform umfasst das Transportsystem 120 ferner ein Steuerungssystem 125, das mit dem Transportmittel 123 bzw. den Antriebseinrichtungen 122 und 124 verbunden ist, um damit eine gesteuerte Transportaktivität des Transportmittels 123 und des darin verweilenden Bedieners zu ermöglichen. Beispielsweise kann das Steuerungssystem 125 die erforderlichen Ansteuersignale bereitstellen, um eine bedienerfreundliche Bewegungsart für eine Transportaktivität zu erzeugen, so dass beispielsweise ein nahezu ruckfreies Transportieren mit entsprechender Beschleunigungs- und Abbremsphase erreicht wird, wenn das Transportmittel 123 zu einem entsprechenden Melkplatz 110 verfahren wird. Beispielsweise kann die Bewegung des Transportmittels 123 so gesteuert werden, dass keine unnötig hohen Beschleunigungskräfte während der gesamten Transportphase auftreten. In weiteren anschaulichen Ausführungsformen ist das Steuerungssystem 125 mit den mehreren Melkplätzen 110 verbunden, beispielsweise mit den entsprechenden Sensorsystemen 111, um entsprechende Steuersignale aus den Sensorinformationen zu erhalten oder diese zu erzeugen. Auf diese Weise kann die Abfolge entsprechender Transportaktivitäten des Transportmittels 123 in gesteuerter Weise so erfolgen, dass für den Melkstand 100 vorgegebene Kriterien erfüllt werden. So kann beispielsweise die Steuerung der Transportaktivitäten so erfolgen, dass der Bediener in dem Transportmittel 123 während einer gewünschten Phase eines jeweiligen Melkvorgangs "vor Ort" ist, um damit die erforderlichen Funktionen zu erfüllen. Wie nachfolgend detaillierter erläutert wird, können insbesondere für den Melkvorgang spezifische Informationen oder auch entsprechende Referenzdaten dem Steuerungssystem 125 zur Verfügung gestellt werden, um damit eine geeignete Sequenz aus Transportaktivitäten zu erzeugen.

Während des Betriebs des Melkstands 100 können die zu melkenden Tiere 113 jeweils entsprechende Melkplätze 110a, ..., 110n betreten, wobei dies durch entsprechendes Lockfutter, beispielsweise Rüben, etc. initiiert werden kann. Dazu können beispielsweise geeignete Türmechanismen vorgesehen sein, die einen Zutritt der Tiere 113 ermöglichen und ein Verlassen des jeweiligen Melkplatzes 110 erst nach Ende des Melkvorganges ermöglichen. In anschaulichen Ausführungsformen sind die einzelnen Tiere 113 mit Identifizierungsmarken versehen, die bei Betreten des jeweiligen Melkplatzes oder in periodischer Weise ausgelesen werden, um damit dem Steuerungssystem 125 mitzuteilen, welches Tier in welchem Melkplatz anwesend ist. In einigen Ausführungsformen kann das Steuerungssystem 125 auf Grund dieser Informationen und auf Grund möglicher Referenzdaten bereits eine vorläufige Prognose über den Verlauf des Melkvorgangs erstellen, so dass auf der Grundlage des aktuellen Status des Melkstandes 100, d. h. der Position des Transportmittels 123, dem Status der anderen Melkplätze 110, und dergleichen eine entsprechende Sequenz aus Transportaktivitäten ermittelt werden kann, so dass bei Bedarf das Steuerungssystem 125 auch geeignet auf einen jeweiligen Melkplatz 110 einwirken kann, um entsprechende Bedingungen auf der Grundlage der erwarteten Prozesssequenz zu schaffen. Beispielsweise kann bei entsprechender Auslastung des Transportssystems 120 bzw. des darin transportierten Bedieners (nicht gezeigt) der Beginn eines Melkvorgangs verzögert werden, wobei dann das Steuerungssystems 125 beispielsweise durch optische, akustische oder andere Reize oder durch spezielles Futter, geeignete Bedingungen schaffen kann, so dass das Tier 113 eine entsprechende Melkbereitschaft beibehält. In anderen Fällen kann die erforderliche Transportaktivität so ermittelt werden, dass das Transportmittel 123 zu dem jeweiligen Melkplatz transportiert wird, beispielsweise zu dem Melkplatz 110a, ohne dass eine unnötig hohe Wartezeit für das entsprechende Tier 113 vor dem eigentlichen Beginn des Melkvorgangs entsteht, wodurch der Durchsatz der einzelnen Melkplätze 110 verbessert wird. Wenn beispielsweise zuvor die Anwesenheit des Bedieners am Melkplatz 110n erforderlich war, wobei beispielsweise dort ein Melkvorgang begonnen wurde oder ein entsprechender Melkvorgang in der Endphase ist, kann sodann das Steuerungssystem 125 denjenigen Melkplatz 110 bestimmen, der in der zeitlichen Reihenfolge als nächstes zu bedienen ist, wobei dies auf der Grundlage entsprechender Informationen beruhen kann, wie dies zuvor erläutert ist. Daraufhin wird das Transportmittel 123 unter geeigneter Ansteuerung der Antriebseinrichtungen 122, 124 in Bewegung versetzt und zu dem Melkplatz 110a, wenn dieser als nächster Melkplatz ausgewählt ist, geführt und dort so positioniert, dass der darin transportierte Bediener die entsprechenden Handlungen vornehmen kann.

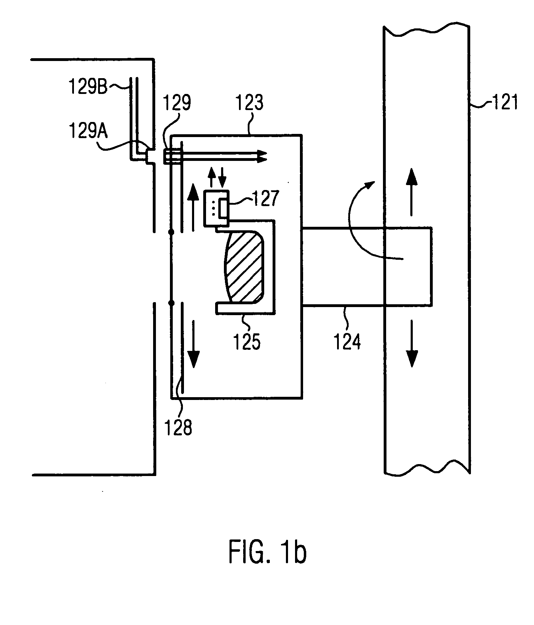

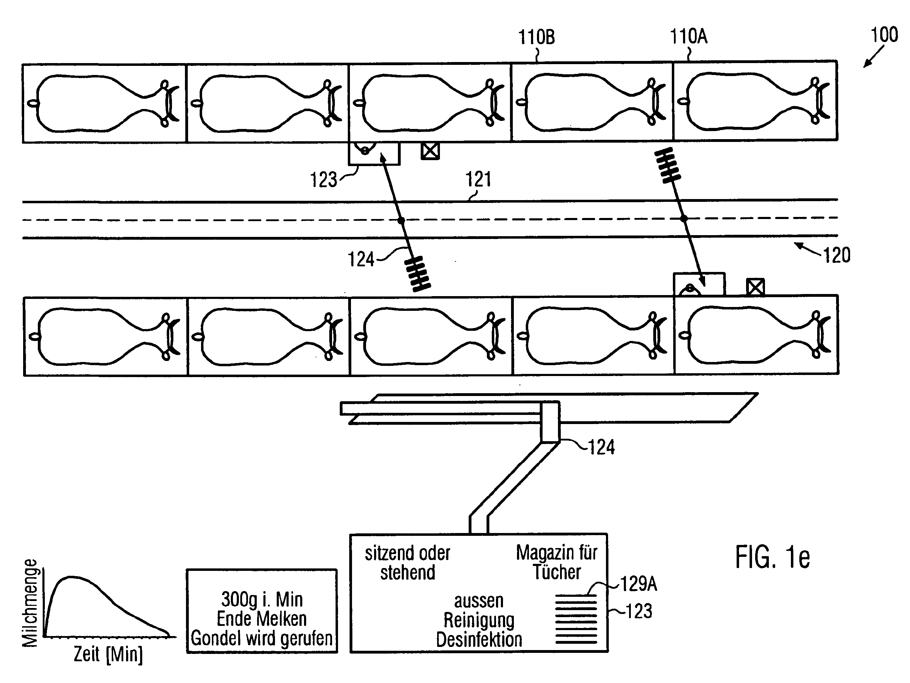

Fig. 1b zeigt schematisch eine Draufsicht des Transportmittels 123 gemäß anschaulicher Ausführungsformen, wobei das Transportmittel 123 in Form einer Gondel bzw. einer Kabine vorgesehen sein kann, so dass zumindest während der jeweiligen Transportaktivitäten eine geeignete Umgebung für den Bediener geschaffen wird. In der gezeigten Ausführungsform weist das Transportmittel 123 einen Sitz 126 auf, der in geeigneter Weise mit dem Transportmittel 123 gekoppelt ist, so dass ein sicheres und zuverlässiges Befördern der Bedienperson während aller Phasen des Transportvorgangs ermöglicht wird. Alternativ oder zusätzlich kann eine Halterung vorgesehen sein, so dass der Bediener eine aufrechte Position einnehmen kann, wobei dennoch die Wirkungen möglicher Beschleunigungskräfte zuverlässig aufgefangen werden können. Das Transportmittel 123 kann in der dargestellten Ausführungsform eine Anwenderschnittstelle 127 aufweisen, die mit dem Steuerungssystem 125 verbunden ist, um ein Eingreifen des Bedieners in die Transportaktivität zu ermöglichen und/oder um geeignete Informationen für den Bediener zu präsentieren. Beispielsweise kann die Anwenderschnittstelle 127 beliebige geeignete Komponenten, wie sie zuvor beschrieben sind, aufweisen, um eine Kommunikation mit dem Steuerungssystem 125 zu ermöglichen. Die Anwenderschnittstelle 127 kann ferner ausgebildet sein, um auch mit einem externen System oder mit entsprechenden Komponenten in den einzelnen Melkplätzen 110 zu kommunizieren. Beispielsweise können entsprechende Statusinformationen über die einzelnen Melkplätze präsentiert werden, wobei bei Bedarf geeignete Steuerungsaktivitäten durch den Bediener in Gang gesetzt werden können, etwa das Einstellen gewisser Stimulationsreize, und dergleichen, die ggf. ein direktes Eingreifen des Bedieners nicht erforderlich machen. In weiteren anschaulichen Ausführungsformen ist ein Sicherungssystem 128 vorgesehen, das ein Verlassen oder Betreten des Transportmittels 123 nur bei Stillstand ermöglicht oder zumindest die Gefahr eines unbeabsichtigten Verlassens oder Betretens bei Bewegung des Transportmittels 123 stark reduziert, so dass ein hohes Maß an Sicherheit für den Bediener geschaffen wird. Beispielsweise kann die Anordnung des Melkplatzes 100 und des Transportmittels 123 so sein, dass der Bediener zumindest teilweise das Transportmittel 123 verlassen muss, um die erforderlichen Handlungen und Funktionen auszuführen. Dabei kann das Sicherungssystem 128 gewährleisten, dass in dieser Phase eine mechanisch stabile Position erreicht und beibehalten wird. Beispielsweise kann das Sicherungssystem automatisch öffnende und schließende Türen, entsprechende Sensoren, die einen Alarm auslösen, und dergleichen umfassen. Ferner kann das System 128 auch ein entsprechendes Erfassungssystem aufweisen, um damit die Anwesenheit eines Bedieners innerhalb des Transportmittels 123 zu erkennen. Somit kann bei einer entsprechenden Steuerungsstrategie ein Weitertransport des Transportmittels 123 ohne Anwesenheit eines Bedieners vermieden werden. In anderen Ausführungsformen sind die Melkplätze 110 und das Transportmittel 123 so gestaltet, dass der Bediener ohne Verlassen des Transportmittels 123 auf das entsprechende Tier 113 einwirken kann oder indem in gesteuerter Weise eine Plattform oder der Sitz 126 in den Melkplatz 110 hineinbewegt werden, um damit entsprechende Aktivitäten, etwa das Desinfizieren des Euters, das Anrüsten des Melkgeschirrs, und dergleichen zu verrichten. Auch in diesen Beispielen kann das System 128 dann dafür sorgen, dass eine Bewegung des Transportmittels 123 nicht möglich ist, während der Bediener die entsprechenden Handlungen vornimmt. In einigen Ausführungsformen kann das System 128 auch entsprechende Sensoren in den jeweiligen Melkplätzen 110 umfassen, die die Anwesenheit eines Bedieners in dem Melkplatz detektieren, so dass eine Weiterfahrt des Transportmittels 123 bei erkannter Anwesenheit eines Bedieners in einem Melkplatz vermieden wird. Das Transportmittel 123 kann ferner entsprechende Vorratsmagazine und Versorgungsanschlüsse aufweisen, um erforderliche Betriebsmittel mitzuführen und vor Ort an dem jeweiligen Melkplatz einzusetzen. Entsprechende Vorrichtungen sind beispielsweise in Fig. 1e schematisch dargestellt. In der gezeigten Ausführungsform ist ein Versorgungsanschluss 129 vorgesehen, der mit einem entsprechenden Gegenstück 129a gekoppelt werden kann, so dass über die entsprechende Versorgungsleitung 129b die gewünschten Betriebsmittel, beispielsweise Wasser, Druckluft, etc., bei Bedarf auch innerhalb des Transportmittels 123 verfügbar sind. Über den Anschluss 129 können auch für das Transportmittel 123 erforderliche Betriebsmittel zugeführt werden, etwa Strom, Druckluft, Hydrauliköl, und dergleichen, so dass eine entsprechend Versorgung über die Führung 121 reduziert oder evtl. ganz vermieden werden kann.

Während des Betriebs des Transportmittels 123 in dem erfindungsgemäßen Transportsystem 120 kann je nach Ausstattung eine mehr oder minder "autarke" Arbeitsumgebung geschaffen werden, wodurch die Effizienz des Melkstands bei reduzierter Belastung des Bedienpersonals verbessert werden kann.

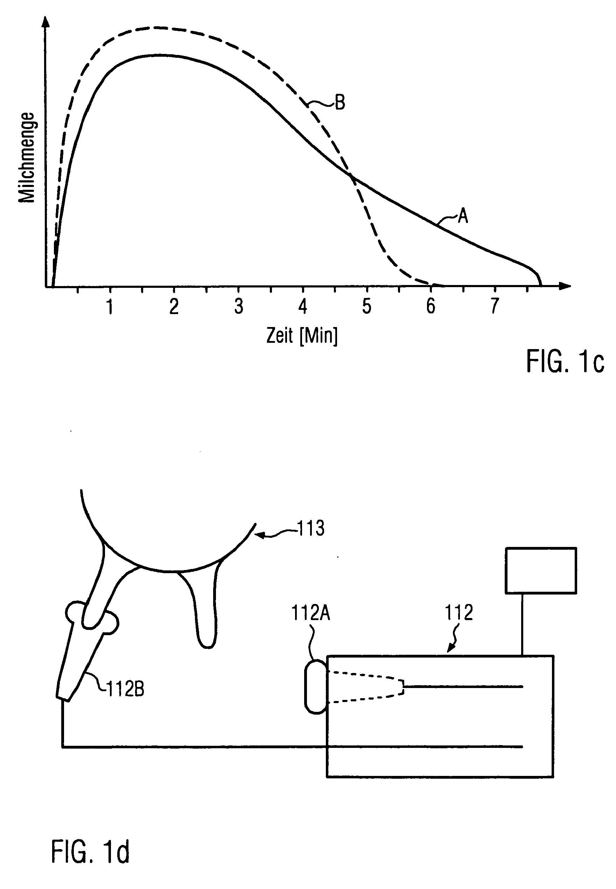

Fig. 1c zeigt schematisch einen Verlauf von zwei unterschiedlichen Milchkurven A, B, die in anschaulichen Ausführungsformen als Grundlage zur Steuerung des Transportsystems 120 dienen. Wie zuvor bereits erläutert wurde, geben entsprechende Milchflusskurven in sehr repräsentative Weise das Melkverhalten von Tieren wieder, wobei sich die einzelnen Milchflusskurven, wie dies durch die Kurven A und B schematisch dargestellt ist, Tier-individuell deutlich unterscheiden können. Daher wird in einigen Ausführungsformen auf der Grundlage der entsprechenden Milchdurchflusskurven ein geeigneter Zeitpunkt für entsprechende Transportaktivitäten ermittelt, um damit zu gewährleisten, dass der Bediener während einer gewünschten Phase oder während eines gewünschten Zeitpunkts des Melkvorgangs bei dem betreffenden Tier vor Ort ist. Beispielsweise können die Kurven A, B aktuell aufgezeichnete Milchflusskurven repräsentieren, die z.B. durch geeignete Sensoren im Sensorsystem 111 ermittelt werden, wobei zu berücksichtigen ist, dass in diesem Falle erst ein entsprechender Abschnitt bis zu der aktuellen Melkzeit der Kurven A und B gemessen ist. Auf der Grundlage beispielsweise der Steigung und des momentanen oder des integrierten Milchmengenwertes kann dann ein entsprechender Verlauf voraus bestimmt und ein geeigneter Zeitpunkt für das Initiieren einer entsprechenden Transportaktivität ermittelt werden. Beispielsweise kann durch das Ermitteln der Änderungsrate, beispielsweise über einen gewissen Zeitraum hinweg, und aus der bereits ermolkenen Milchmenge erkannt werden, dass die Milchflusskurve eines Tieres vermutlich der Kurve A entspricht, so dass dann auch ein geeigneter Zeitwert berechnet werden kann, in welchem der Milchfluss auf einen unteren Schwellwert abgesunken ist, der als das Ende des Melkvorgangs betrachtet wird. In ähnlicher Weise kann aus entsprechenden Daten erkannt werden, dass eine kürzere Melkdauer entsprechend der Kurve B für ein anderes Tier zu erwarten ist, woraus wiederum ein geeigneter Zeitpunkt errechnet wird, der beispielsweise weniger tolerant im Hinblick auf eine Verzögerung ist, da erwartet werden kann, das die Endphase des entsprechenden Melkvorgangs im Vergleich zur Kurve A deutlich geringer ist. Somit kann beispielsweise bei einem insgesamt steileren Verlauf der Milchflusskurve ein entsprechend frühzeitig festgelegter Transportstartzeitpunkt bestimmt werden, um damit ein rechtzeitiges Eintreffen des Bedieners zu gewährleisten. Auch kann eine entsprechende Transportpriorität höher angesetzt werden, im Vergleich zu Tieren mit einer sehr flach auslaufenden Milchflusskurve, da dort das entsprechende Zeitfenster für das Eintreffen des Bedieners entsprechend größer gewählt werden kann.

In weiteren Ausführungsformen repräsentieren die Kurven A, B entsprechende Referenzdaten, die ohne aktuelle Messdaten zur Steuerung der Transportaktivitäten verwendet werden können, da insbesondere die Milchflusskurven eine relativ gute Langzeitstabilität für die einzelnen Tiere aufweisen. In weiteren Ausführungsformen werden entsprechende Referenzdaten zusammen mit tatsächlich gemessenen Werten verwendet, um eine noch präzisere Vorhersage eines geeigneten Zeitpunkts für eine Transportaktivität zu erhalten. Beispielsweise kann damit durch einen Vergleich der Referenzwerte und der aktuellen Werte auch eine geringfügige Abweichung erkannt und für einen zuverlässigen vorausgesagten Transportzeitpunkt verwendet werden. Auch können signifikante Abweichungen von der erwarteten Milchflusskurve und der tatsächlichen Milchflusskurve verwendet werden, um entsprechende Prioritäten für Transportaktivitäten zu erstellen. Durch eine entsprechende Bewertung des Melkvorgangs lassen sich die jeweiligen Zeitfenster für das Eintreffen des Bedieners relativ klein wählen, so dass insgesamt die "Bearbeitungszeit" pro Melkstand relativ klein gemacht werden kann, wodurch damit der Gesamtdurchsatz des Melkstands 100 erhöht werden kann. Beispielsweise kann durch eine Messung der Milchflusskurve oder einer entsprechenden dazu in Beziehung stehenden Größe in Kombination mit geeigneten Referenzdaten ein Zeitfenster von etwa 10 Sekunden im Bereich des vorausgesagten Endes des Melkvorgangs ausreichend sein.

Fig. 1d zeigt schematisch das Melkgeschirr 112 gemäß einer anschaulichen Ausführungsform, wobei einzelne Melkbecher 112a, 112b individuell mit Vakuum beaufschlagbar sind, so dass die einzelnen Euterviertel des Tieres 113 zumindest in der Endphase des Melkvorgangs individuell gemolken werden können. Ferner ist durch eine entsprechende Ausbildung des Melkgeschirrs 112 die Handhabbarkeit deutlich verbessert, da lediglich einzelne Melkbecher 112a, 112b angelegt und damit vom Bediener gehalten und zum Tier 113 geführt werden müssen. Die Notwendigkeit für große und damit schwere Sammelstücke entfällt damit, so dass es sich eine deutliche Arbeitserleichterung ergibt. Insbesondere kann das Melkgeschirr 112 so angeordnet sein, dass es sich von dem Transportmittel 123 aus bedienen lässt, wie dies zuvor beschrieben ist. In einigen Ausführungsformen ist das Melkgeschirr 112 ferner in ein System integriert, das eine zumindest teilweise automatisierte Abfolge einzelner Prozessschritte ermöglicht. Beispielsweise kann das Abnehmen bzw. Abfallen der Melkbecher 112a, 112b in automatisierter Weise erfolgen, ohne dass eine Bodenberührung der Melkbecher 112 a, 112b und damit eine Verschmutzung eintritt. Des weiteren können entsprechende Reinigungssequenzen in einer automatisierten Weise ausgeführt werden, ohne dass der Bediener eingreifen muss. Auf diese Weise lässt sich die effektive Verweildauer des Bedieners in jedem Melkplatz deutlich reduzieren, so dass beispielsweise mittlere Melkdauern pro Melkgeschirr 112 von 6 bis 8 Melkungen pro Stunde erreichbar sind. Während der entsprechenden Melkzeiten ist die Anwesenheit des Bedienpersonals nur während besonders kritischer Phasen, d.h. beim Anrüsten und während des Endes des Melkvorgangs erforderlich, wobei die entsprechenden Aufgaben aufgrund der deutlichen Entlastung während des Transports des Bedieners und auch bei der Handhabung des Melkgeschirrs 112 mit erhöhter Effizienz ausgeführt werden können. So kann beispielsweise die sehr wichtige Inspektion der Milch vor dem eigentlichen Melken durch den Bediener zuverlässig ausgeführt werden und auch bei Bedarf eine entsprechende Reinigung oder Stimulation der Zitzen des Tieres kann durch den Bediener zuverlässig durchgeführt werden, da insgesamt dennoch eine hohe Effizienz erreicht wird und diese durch beispielsweise Verkürzen oder Weglassen entsprechender Handlungen in Prinzip nicht wesentlich gesteigert werden kann, die in konventionellen Systemen ohne Transportsystem jedoch zu einer Effizienzeinbuße führen und damit auf Kosten der Qualität der Milch und/oder des langfristigen Ertrags häufig nicht korrekt ausgeführt werden.

Fig. 1e zeigt schematisch einen Melkstand 100 als einen Doppeltandem-Melkstand, wobei die Melkplätze 110 in einer im wesentlichen linearen Konfiguration in einer Zweierreihe angeordnet sind. Die Führung 121 des Transportsystems 120 ist zwischen den beiden Reihen angeordnet, so dass das Transportmittel 123 linear bewegbar ist und mittels der Antriebseinrichtung 124 in geeigneter Weise zwischen den beiden Reihen hin und her bewegt werden kann. Beispielsweise kann die Führung 121 als eine Laufschiene mit geeigneten Antriebsmitteln versehen sein, die in einer geeigneten Höhe installiert ist, so dass das Transportmittel 123 unter der Führung 121 hindurch bewegt werden kann. In anderen Ausführungsformen kann die Führung 121 ein bodengestütztes Führungssystem sein, über das das Transportmittel 123 hinweggeschwenkt werden kann. Aufgrund der Doppeltandemanordnung ergeben sich trotz der linearen Anordnung der Melkplätze 110 insgesamt relativ kurze Transportdistanzen, so dass der Anteil der Transportzeit an der Gesamtarbeitszeit des Bedieners gering gehalten werden kann.

Fig. 1f zeigt schematisch das verwendete Transportmittel 123, das in Form einer Gondel bzw. Kabine vorgesehen ist, wobei ein entsprechendes Magazin 129a für benötigte Betriebsmittel, etwa Tücher, Wasser, Reinigungsmaterialien, Desinfektionsmittel, und dergleichen vorgesehen ist. Das zentrale Vorsehen des Versorgungsmagazins 129a in dem Transportmittel 123 ermöglicht eine zentrale Versorgung mit den entsprechenden Betriebsmitteln, ohne dass diese individuell in den einzelnen Melkplätzen 110 vorzusehen und damit zu bevorraten sind.

Beim Betrieb des Melkstands 100 aus Fig. 1e können die gleichen Steuerungsstrategien eingesetzt werden, wie sie zuvor beschrieben sind. In vorteilhaften Ausführungsformen wird die Bewegung des Transportmittels 123 auf der Grundlage einer Milchflusskurve durchgeführt, um insbesondere das Ende eines Melkvorgangs zu erkennen und in geeigneter Weise unter Berücksichtung der aktuellen Position des Transportmittels 123 einen Transportvorgang zu initiieren.

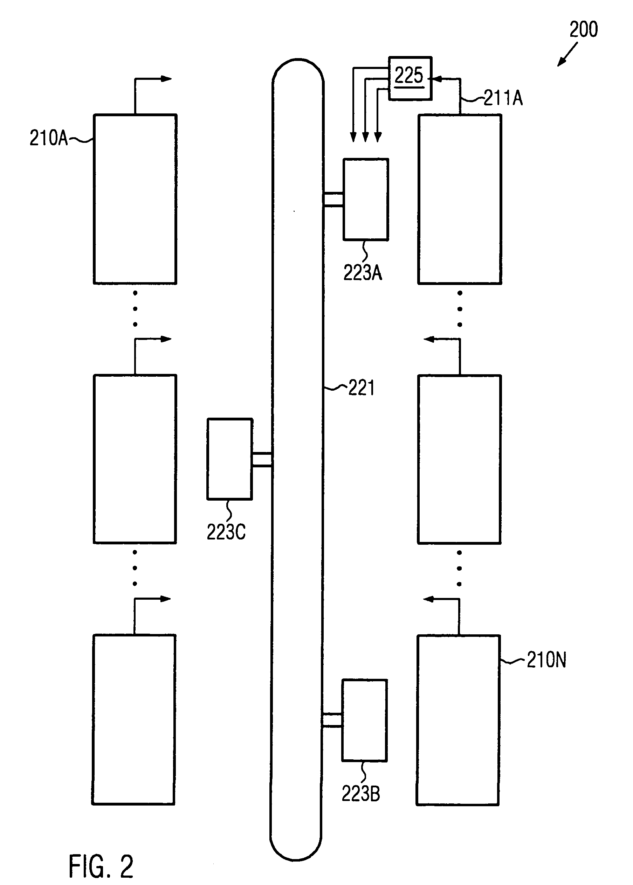

Fig. 2 zeigt schematisch einen Melkstand 200 gemäß weiterer anschaulicher Ausführungsformen. Mehrere Melkplätze 210, etwa Melkplätze 210a, ..., 210n sind in einer geeigneten Weise angeordnet, wobei hier eine Doppeltandem-Anordnung vorgesehen ist. Ein Transportsystem 220 weist eine Führung 221 auf, mit Hilfe derer mehrere Transportmittel 223 a, ..., 223c in Bewegung versetzt werden können. Beispielsweise kann die Führung 221 ein entsprechendes Antriebsmittel, etwa ein Antriebsseil, Führungsschienen und dergleichen aufweisen. Des weiteren ist ein Steuerungssystem 225 vorgesehen, das in geeigneter Weise mit den Melkplätzen 210 in Verbindung steht, um von dort entsprechende Steuersignale 211 a, ..., 211 n zu erhalten, die den Status des jeweiligen Melkplatzes kennzeichnen. Beispielsweise können die einzelnen Melkplätze 210 in gleicher oder ähnlicher Weise aufgebaut sein, wie dies zuvor mit Bezug zu dem Melkstand 100 beschrieben ist. Des weiteren ist das Steuerungssystem 225 ausgebildet, eine entsprechende Anzeige bereit zu stellen, um zumindest die als nächstes anstehende Transportaktivität anzuzeigen, d.h., um denjenigen Melkplatz zu markieren, der als nächstes die Anwesenheit eines Bedieners erfordert. Beispielsweise kann das Steuerungssystem 225 mit den einzelnen Transportmitteln 223a, ..., 223c verbunden sein, um darin eine entsprechende Anzeige oder Information bereit zu stellen. In anderen Beispielen kann zusätzlich oder alternativ eine entsprechende Markierung der Melkplätze selbst, beispielsweise in Form von Lichtsignalen und dergleichen, durch das Steuerungssystem 225 erfolgen.

Während des normalen Betriebs des Melkstands 200 wird eine geeignete Geschwindigkeit für die einzelnen Transportmittel 223a, ..., 223c eingestellt, die ein Betreten und Verlassen der einzelnen Transportmittel an den jeweiligen Melkplätzen ermöglicht. Bei Eintreffen eines der Transportmittel 223a, ..., 223c an dem Melkplatz, der als ausgewählter Melkplatz markiert ist, kann der Bediener somit das Transportmittel verlassen und die erforderlichen Handlungen vornehmen. Danach kann das nächste vorbeifahrende Transportmittel genutzt werden, um zu dem nächsten Melkplatz zu gelangen, der von dem Steuerungssystem 225 als nächster ausgewählter Melkplatz markiert ist. Dabei können die einzelnen Transportmittel 223a, ..., 223c auch entsprechende Schnittstellen aufweisen, wie dies zuvor besprochen ist, um wichtige Informationen für den Bediener bereit zu stellen und auch um Steuerungseingriffe durch den Bediener zu ermöglichen. Insbesondere kann der Algorithmus zum Erstellen einer entsprechenden Transportsequenz durch das Steuerungssystem 225 die im wesentlichen kontinuierliche Geschwindigkeit und die Richtungsgebundenheit der Bewegung berücksichtigen, um dennoch eine sehr effiziente Transportsequenz zu erstellen. Beispielsweise kann bei ähnlichen Prioritäten für einzelne Melkplätze 210 die Sequenz so zusammengestellt werden, dass bei der gegebenen Transportrichtung insgesamt eine minimale Transportzeit erforderlich ist.

Insbesondere kann das System 200 in einfacher Weise von mehreren Bedienern benutzt werden, so dass sich insgesamt relativ große Tierbestände mit einer Transporteinrichtung mit geringer Komplexität handhaben lassen. Bei Betrieb mit mehreren Bedienern ist in einigen Ausführungsformen das Transportsystem 225 so ausgebildet, dass die aktuelle Position und die Anzahl der Bediener berücksichtigt wird, wenn ein nächster Melkplatz ausgewählt wird. Zur Erfassung der Position der einzelnen Bediener können entsprechende Sensoren vorgesehen sein, etwa innerhalb der Transportmittel 223a, ..., 223 c und innerhalb der Melkplätze 210 und/oder die Bediener können entsprechende Identifizierungsmarken mit sich führen, die dann von dem Steuerungssystem 225 in geeigneter Weise ausgelesen werden können. In anderen anschaulichen Ausführungsformen ist die Führung 221 als ein im wesentlichen kontinuierlich laufendes Band ausgebildet, so dass keine separaten individuellen Transportmittel in Kabinen- oder Gondelform erforderlich sind. Auf diese Weise kann ein nahezu kontinuierliches Zusteigen und Aussteigen gewährleistet werden, wobei die erforderlichen Informationen dann dem Bediener in geeigneter Weise ermittelt werden, beispielsweise durch akustische Signale, optische Signale, und dergleichen.

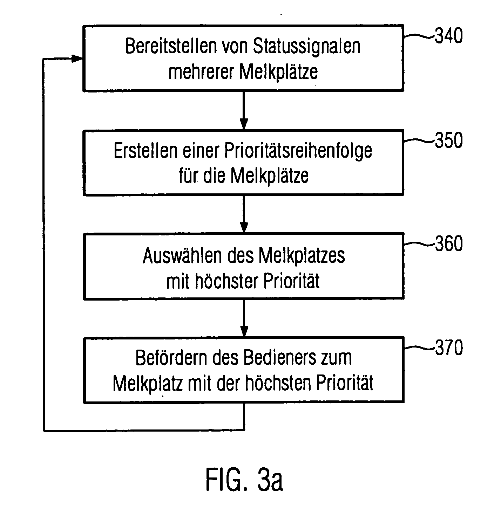

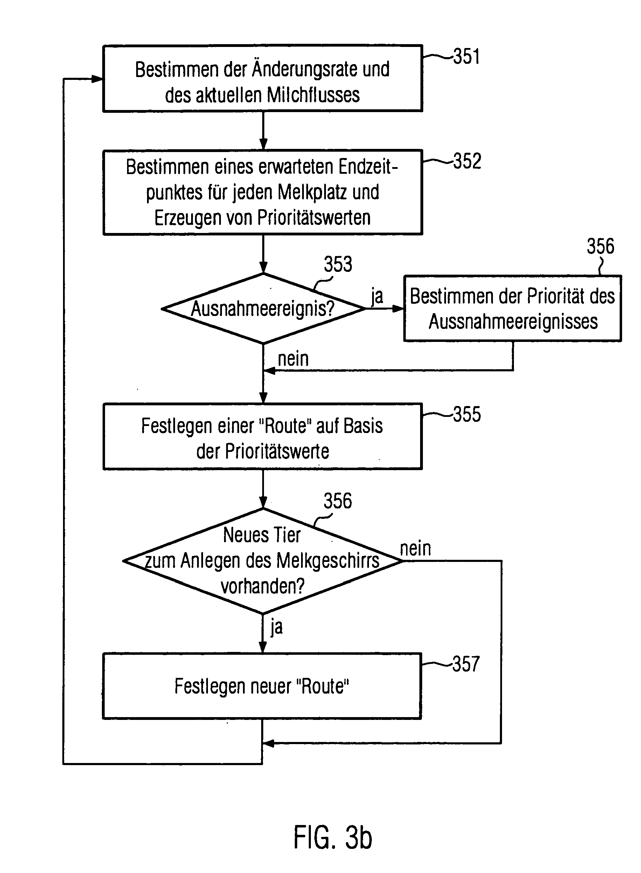

Fig. 3 a zeigt schematisch eine Steuerungsstrategie 330 zum Betreiben der Melkstände 100 und 200 gemäß weiterer anschaulicher Ausführungsformen der vorliegenden Erfindung. Im Schritt 340 werden entsprechende Statussignale mehrerer Melkplätze, etwa der Melkplätze 110, 210 erzeugt und bereitgestellt, so dass aus diesen Statussignalen entsprechende Informationen über den aktuellen Status eines Melkvorgangs oder über die Anwesenheit eines Tieres gewonnen werden können. Im Schritt 350 wird gemäß anschaulicher Ausführungsformen eine Prioritätsreihenfolge auf der Grundlage der entsprechenden Statussignale erstellt, um damit eine aktuelle Rangliste der Melkplätze zu erstellen, die die zeitliche Abfolge für die Notwendigkeit der Anwesenheit eines Bedieners in den jeweiligen Melkplätzen repräsentiert. Die entsprechenden Prioritäten können auf der Grundlage entsprechender Verfahren ermittelt werden, wie sie zuvor beschrieben sind und wie sie auch detaillierter mit Bezug zu Fig. 3b erläutert sind. Im Schritt 360 wird dann der Melkplatz mit der höchsten Priorität als der nächste anzufahrende Melkplatz ausgewählt, wobei abhängig von der Art der Automatisierung des erfindungsgemäßen Melkstandes die Auswahl dem oder den Bediener/n mitgeteilt wird, so dass diese das Transportsystem in geeigneter Weise benutzen, um den entsprechenden Melkplatz aufzusuchen. In anderen Ausführungsformen wird die Auswahl von einem Steuerungssystem verwendet, um das entsprechende Transportsystem automatisch anzuweisen, die geforderte Position anzufahren.

Somit wird im Schritt 370 der Bediener zu dem Melkplatz mit der höchsten Priorität befördert.

Fig. 3b zeigt ein Flussdiagram, in welchem ein detaillierter Ablauf zur Ermittlung entsprechender Prioritätswerte und damit zur Ermittlung einer geeigneten Transportsequenz gemäß dem Schritt 350 aus Fig. 3a dargestellt ist. In der dargestellten Ausführungsform wird im Schritt 351 die Milchflusskurve, beispielsweise in Form einer aktuell gemessenen und/oder einer Referenzmilchflusskurve verwendet, um damit eine geeignete Abschätzung des entsprechenden Melkvorgangs zu ermöglichen. Beispielsweise wird in einer Ausführungsform die Änderungsrate und der aktuelle Milchfluss bestimmt.

Im Schritt 352 wird in einer Ausführungsform auf der Grundlage der Daten aus dem Schritt 351 ein geeigneter Zeitpunkt oder ein Zeitraum für die Anwesenheit des Bedieners an jedem der Melkplätze ermittelt. In einer Ausführungsform wird zusätzlich zum Startzeitpunkt des Melkvorgangs, bei welchem das Anrüsten des Melkgeschirrs erforderlich ist, auch ein erwarteter Endzeitpunkt für jeden Melkplatz festgelegt, und aus diesen erwarteten Endzeitpunkten werden entsprechende Prioritätswerte erzeugt, die somit einen nächsten Melkplatz definieren, für den erwartungsgemäß die Anwesenheit des Bedieners als nächstes erforderlich ist.

Im Schritt 353 wird in einigen Ausführungsformen erfasst, ob es Ausnahmeereignisse gibt, die eine hohe Priorität besitzen und ggf. eine Aktualisierung der zuvor ermittelten Prioritätswerte erforderlich machen. Wenn dies der Fall ist, wird im Schritt 354 die Priorität der Ausnahmeereignisse bewertet, beispielsweise kann ein Sensorsignal den Abfall eines Melkbechers anzeigen, oder der signifikante Abfall im Milchfluss kann ein Abfallen von Melkbechern anzeigen, so dass ein entsprechendes Ausnahmeereignis eine hohe Priorität aufweist.

Danach wird im Schritt 355 eine "Route" bzw. eine Sequenz aus Transportaktivitäten oder zumindest eine nächste Transportaktivität auf der Grundlage der zuvor ermittelten Prioritätswerte festgelegt, wobei bei der Erzeugung der Prioritätswerte bereits weitere Kriterien, etwa der Durchsatz, die Minimierung von Transportaktivitäten, und dergleichen, Berücksichtigung finden können. In anderen Ausführungsformen kann im Schritt 355 eine Neubewertung der Prioritätswerte erfolgen, wenn weitere vom Melkvorgang unabhängige Faktoren zu berücksichtigen sind.

Ferner kann in dem Ablauf beispielsweise im Schritt 356 abgefragt werden, ob ein neues Tier in einem bislang gerade nicht benutzten Melkplatz anwesend ist, so dass im Schritt 357 aufgrund einer entsprechenden Priorität eine neue "Route" festgelegt werden kann. Wenn keine Änderung in der aktuellen Besetzung der Melkplätze erkannt wird, springt der Ablauf zum Schritt 351 zurück, um dort wieder aktuelle Messwert zu erhalten. Ferner kann nach dem Schritt 357 zum Schritt 360 aus Fig. 3a verzweigt werden, so dass dann der eigentliche Transportvorgang stattfinden kann, wobei unabhängig die in Fig. 3b gezeigte Schleife durchlaufen wird, so dass stets eine aktualisierte Version der Prioritäten der entsprechenden anstehenden Transportaktivitäten vorhanden ist.

Die vorliegende Erfindung ermöglicht somit eine effiziente Behandlung großer Tierbestände bei reduzierter Belastung für das Bedienpersonal und verbesserter Effizienz, beispielsweise im Hinblick auf die Betreuung der Tiere, das Einhalten der Milchverordnung, und dergleichen, indem der Transport des Bedieners zu den jeweiligen Melkplätzen in hohem Maße automatisiert wird. Dabei ist in vorteilhaften Ausführungsformen ein gesteuerter Transport vorgesehen, wobei als Steuerungsgröße geeignete Eingangsinformationen dienen, etwa die Milchdurchflusskurve oder andere den Melkvorgang charakterisierende Größen, die somit eine Tier-individuelle Steuerung des Transports ermöglichen.

## Patentansprüche

1. Melkstand (100) mit
mehreren Melkplätzen (110), wovon jeder ein zu melkendes Tier aufnehmen kann und ein Melkgeschirr (112) zum Anlegen an das Tier aufweist, und
einem Transportsystem (120) mit einem Transportmittel (123) zum Befördern einer Person zu jedem der mehreren Melkplätze (110),
einem mit den mehreren Melkplätzen verbundenen Sensorsystem (111), das ausgebildet ist, ein zum Steuern des Transportmittel (123) geeignetes Sensorsignal bereitzustellen, und ein Sensorelement zur Erfassung einer mit dem aktuellen Milchfluss in Beziehung stehenden Größe in jedem der mehreren Melkplätze aufweist,
einem mit dem Transportsystem (120) und dem Sensorsystem (111) verbundenen Steuerungssystem (125), das ausgebildet ist, das Transportsystem (120) anzuweisen, das Transportmittel (123) entsprechend einer aus dem Sensorsignal ermittelten Steuergröße zu einem der Melkplätze (110) zu befördern,
**dadurch gekennzeichnet, dass**
das Steuerungssystem eine Referenzdateneinrichtung aufweist, die ausgebildet ist, zumindest für einige der zu melkenden Tiere individuell für den Melkvorgang relevante Referenzdaten zur Ermittlung der Steuergröße bereitzustellen.

2. Melkstand nach Anspruch 1, wobei das Sensorsystem (111) ein Sensorelement zum Erkennen der Anwesenheit eines zu melkenden Tieres in jedem der mehreren Melkplätze (110) aufweist.

3. Melkstand nach Anspruch 2, wobei das Sensorsystem (111) ausgebildet ist, die Identität eines zu melkenden Tieres in jedem der mehreren Melkplätze zu ermitteln.

4. Melkstand nach Anspruch 3, wobei das Steuerungssystem (125) eine Anwenderschnittstelle (127) aufweist, die zur Eingabe einer weiteren Steuergröße durch die zu befördernde Person geeignet ist.

5. Melkstand nach einem der vorhergehenden Ansprüche, wobei die mehreren Melkplätze (110) stationär sind.

6. Melkstand nach Anspruch 5, wobei der Melkstand ein Autotandem-Melkstand ist.

7. Melkstand nach einem der Ansprüche 1 bis 6, wobei die mehreren Melkplätze nicht-stationär sind.

8. Melkstand nach einem der vorhergehenden Ansprüche, wobei das Melkgeschirr (112) jedes Melkplatzes für ein gesteuertes automatisches Abnehmen der Melkbecher ausgebildet ist.

9. Melkstand nach einem der vorhergehenden Ansprüche, wobei das Transportsystem (120) und/oder jeder der Melkplätze (110) eine Arretiereinrichtung aufweisen, die das Transportmittel an einer definierten Position an jedem der Melkplätze (110) während einer Bearbeitungszeit hält.

10. Melkstand nach einem der vorhergehenden Ansprüche, wobei das Transportsystem eine erste Antriebseinrichtung zur Bewegung des Transportmittels in einer ersten Bahn und mindestens eine zweite Antriebseinrichtung zur Bewegung des Transportmittels in mindestens einer zu der Bahn unabhängigen Richtung aufweist.

11. Melkstand nach Anspruch 10, wobei die mindestens eine zweite Antriebseinrichtung ausgebildet ist, eine Schwenkung des Transportmittels zu ermöglichen.

12. Verfahren zum semiautomatischen Melken von Tieren mit:
Bereitstellen eines Steuersignals für jeden von mehreren Melkplätzen, das einen Betriebsstatus des jeweiligen Melkplatzes repräsentiert und den aktuellen Milchfluß in jedem der mehreren Melkplätze angibt,
Auswählen eines Melkplatzes, der als nächstes eine Wechselwirkung mit einem Bediener erfordert, und
Befördern des Bedieners zu dem ausgewählten Melkplatz durch ein Transportsystem
**dadurch gekennzeichnet, dass**
das Auswählen eines Melkplatzes, der als nächstes eine Wechselwirkung mit einem Bediener erfordert, auf Grundlage der Steuersignale und eines Vergleichs des aktuellen Milchflusses mit Referenzdaten, die individuell zumindest für einige zu melkende Tiere vorliegen, erfolgt.

13. Verfahren nach Anspruch 12, wobei die individuellen Referenzdaten eine Milchflusskurve für das jeweilige Tier repräsentieren.

14. Verfahren nach Anspruch 12 oder 13, wobei aus der Milchflusskurve ein erwarteter Endzeitpunkt für das jeweilige Tier bestimmt und zum Auswählen des nächsten Melkplatzes verwendet wird und das Befördern des Bedieners zu dem nächsten Melkplatz auf Grundlage des bestimmten Endzeitpunkts gesteuert wird.

15. Verfahren nach einem der Ansprüche 12 bis 14, wobei Auswählen des nächsten Melkplatzes umfasst: periodisches Aktualisieren einer jedem der Steuersignale zugeordneten Priorität und Auswählen des Melkplatzes mit dem Steuersignal mit der höchsten Priorität.

## Claims

1. Milking parlor (100) comprising
plural milking stations (110), of which each can accommodate an animal to be milked and comprises a milking equipment (112) to be put on the animal, and
a transport system (120) with a transport means (123) for transporting a person to each of the plural milking stations (110),
a sensor system (111) which is connected to the plural milking stations and is configured to provide a sensor signal suited for controlling the transport means (123), and a sensor element for detecting a parameter related with the current milk flow in each of the plural milking stations,
a control system (125) which is connected to the transport system (120) and the sensor system (111) and is configured to instruct the transport system (120) to transport the transport means (123) in accordance with a control parameter determined from the sensor signal to one of the milking stations (110),
**characterized in that**
the control system comprises a reference data device which is configured to individually provide reference data of relevance to the milking process at least for some of the animals to be milked so as to determine the control parameter.

2. Milking parlor according to claim 1, wherein the sensor system (111) comprises a sensor element for recognizing the presence of an animal to be milked in each of the plural milking stations (110).

3. Milking parlor according to claim 2, wherein the sensor system (111) is configured to determine the identity of an animal to be milked in each of the plural milking stations.

4. Milking parlor according to claim 3, wherein the control system (125) has a user interface (127) which is suited for the input of a further control parameter by the person to be transported.

5. Milking parlor according to any one of the preceding claims, wherein the plural milking stations (110) are stationary.

6. Milking parlor according to claim 5, wherein the milking parlor is an autotandem milking parlor.

7. Milking parlor according to any one of claims 1 to 6, wherein the plural milking stations are non-stationary.

8. Milking parlor according to any one of the preceding claims, wherein the milking equipment (112) of each milking station is designed for a controlled automatic removal of the teat cups.

9. Milking parlor according to any one of the preceding claims, wherein the transport system (120) and/or each of the milking stations (110) comprise a locking device which holds the transport means at a defined position at each of the milking stations (110) during a treatment time.

10. Milking parlor according to any one of the preceding claims, wherein the transport system comprises a first drive device for moving the transport means along a first path and at least one second drive device for moving the transport means in at least one direction that is independent with respect to the path.

11. Milking parlor according to claim 10, wherein the at least one second drive device is configured to allow a swiveling of the transport means.

12. Method for the semi-automatic milking of animals, comprising:
providing a control signal for each of plural milking stations which represents an operating status of the respective milking station and indicates the current milk flow in each of the plural milking stations,
selecting a milking station which is the next one requiring an interaction with an operator,
transporting the operator to the selected milking station by a transport system,
**characterized in that**
the selection of a milking station that is the next one requiring an interaction with an operator is carried out on the basis of the control signals and of a comparison of the current milk flow with reference data that are individually present at least for some animals to be milked.

13. Method according to claim 12, wherein the individual reference data represent a milk flow curve for the respective animal.

14. Method according to claim 12 or 13, wherein an expected end time is determined from the milk flow curve for the respective animal and is used for selecting the next milking station, and the transport of the operator to the next milking station is controlled on the basis of the determined end time.

15. Method according to any one of claims 12 to 14, wherein the selection of the next milking station comprises: periodically updating a priority assigned to each of the control signals and selecting the milking station with the control signal having the highest priority.

## Revendications

1. Salle de traite (100) comprenant
plusieurs postes de traite (110) dont chacun peut accueillir un animal à traire et comprend un ustensile de traite (112) à appliquer sur l'animal, et
un système de transport (120) avec un moyen de transport (123) destiné à déplacer une personne vers chacun des plusieurs postes de traite (110),
un système de capteur (111) relié aux plusieurs postes de traite, qui est configuré pour fournir un signal de capteur adapté à commander le moyen de transport (123), et présente un élément de capteur destiné à relever une grandeur en relation avec le flux de lait actuel, dans chacun des plusieurs postes de traite,
un système de commande (125) relié au système de transport (120) et au système de capteur (111), et conçu pour donner au système de transport (120) l'instruction de déplacer le moyen de transport (123) vers l'un des postes de traite (110), conformément à une grandeur de commande déterminée à partir du signal de capteur,
**caractérisée en ce que** le système de commande présente un dispositif de données de référence, qui est conçu pour fournir de manière individuelle, tout au moins pour quelques-uns des animaux à traire, des données de référence importantes et pertinentes pour l'opération de traite en vue de la détermination de la grandeur de commande.

2. Salle de traite selon la revendication 1, dans laquelle le système de capteur (111) comprend un élément de capteur destiné à détecter la présence d'un animal à traire dans chacun des plusieurs postes de traite (110).

3. Salle de traite selon la revendication 2, dans laquelle le système de capteur (111) est conçu pour déterminer l'identité d'un animal à traire dans chacun des plusieurs postes de traite.

4. Salle de traite selon la revendication 3, dans laquelle le système de commande (125) présente une interface utilisateur (127), qui est adaptée à la saisie d'une autre grandeur de commande par la personne à déplacer.

5. Salle de traite selon l'une des revendications précédentes, dans laquelle les plusieurs postes de traite (110) sont stationnaires.

6. Salle de traite selon la revendication 5, dans laquelle le poste de traite est un poste de traite dit Auto Tandem.

7. Salle de traite selon l'une des revendications 1 à 6, dans laquelle les plusieurs postes de traite sont non-stationnaires.

8. Salle de traite selon l'une des revendications précédentes, dans laquelle l'ustensile de traite (112) de chaque poste de traite est conçu pour un prélèvement automatique piloté des gobelets trayeurs.

9. Salle de traite selon l'une des revendications précédentes, dans laquelle le système de transport (120) et/ou chacun des postes de traite (110) présentent un dispositif d'arrêt, qui maintient le moyen de transport dans une position définie au niveau de chacun des postes de traite (110) pendant une durée de traitement.

10. Salle de traite selon l'une des revendications précédentes, dans laquelle le système de transport comporte un premier dispositif d'entraînement pour assurer un mouvement de déplacement du moyen de transport sur une première voie, et au moins un deuxième dispositif d'entraînement pour assurer un mouvement de déplacement du moyen de transport dans au moins une direction indépendante de ladite voie.

11. Salle de traite selon la revendication 10, dans laquelle ledit au moins un deuxième dispositif d'entraînement est conçu pour permettre un pivotement du moyen de transport.

12. Procédé pour assurer une traite semi-automatique d'animaux, comprenant
la fourniture d'un signal de commande pour chacun de plusieurs postes de traite, qui représente un état de fonctionnement du poste de traite respectivement considéré et indique le flux de lait actuel dans chacun des plusieurs postes de traite,
la sélection d'un poste de traite, qui est le prochain à nécessiter une interaction avec une personne de service,
et
le transport de la personne de service jusqu'au poste de traite sélectionné, grâce à un système de transport, **caractérisé en ce que**
la sélection d'un poste de traite, qui est le prochain à nécessiter une interaction avec une personne de service, est effectuée sur la base des signaux de commande et d'une comparaison du flux de lait actuel avec des données de référence, qui sont disponibles
individuellement tout au moins pour quelques-uns des animaux à traire.

13. Procédé selon la revendication 12, d'après lequel les données de référence individuelles représentent une courbe de flux de lait pour l'animal respectivement considéré.

14. Procédé selon la revendication 12 ou la revendication 13, d'après lequel à partir de la courbe de flux de lait, est déterminé un instant de fin de traite, qui est utilisé pour la sélection du prochain poste de traite, et le transport de déplacement de la personne de service jusqu'au dit prochain poste de traite, est commandé sur la base dudit instant de fin de traite ayant été déterminé.

15. Procédé selon l'une des revendications 12 à 14, d'après lequel la sélection du prochain poste de traite comprend : l'actualisation périodique de la priorité affectée à chacun des signaux de commande, et la sélection du poste de traite présentant le signal de commande avec la priorité la plus élevée.
